(19) Europäisches Patentamt
European Patent Office
Office européen des brevets

(11) Publication number: **0 157 561 B1**

(12) **EUROPEAN PATENT SPECIFICATION**

(45) Date of publication of patent specification: **13.05.92**

(51) Int. Cl.⁵: **B01D 9/02**, C01G 1/06, C22B 3/00

(21) Application number: **85302029.5**

(22) Date of filing: **25.03.85**

(54) **Metal stripping system and an operation process therefor.**

(30) Priority: **30.03.84 JP 62433/84**
**11.05.84 JP 94071/84**
**11.05.84 JP 94072/84**

(43) Date of publication of application:
**09.10.85 Bulletin 85/41**

(45) Publication of the grant of the patent:
**13.05.92 Bulletin 92/20**

(84) Designated Contracting States:
**DE FR GB IT SE**

(56) References cited:

| | |
|---|---|
| EP-A- 0 046 973 | EP-A- 0 052 354 |
| EP-A- 0 079 246 | FR-A- 2 153 477 |
| FR-A- 2 409 780 | US-A- 3 615 246 |

**CHEMICAL ABSTRACTS, vol. 93, 1980, page 250, abstract no. 136561m, Columbus, Ohio, US**

(73) Proprietor: **KAWASAKI STEEL CORPORATION**
**No. 1-28, 1-Chome Kitahonmachi-Dori**
**Chuo-Ku, Kobe-Shi Hyogo 651(JP)**

(72) Inventor: **Uchino, Kazuhiro c/o Research Laboratories**
**Kawasaki Steel Corporation, 1, Kawasaki-Cho**
**Chiba City(JP)**
Inventor: **Watanabe, Toshio c/o Research Laboratories**
**Kawasaki Steel Corporation, 1, Kawasaki-Cho**
**Chiba City(JP)**
Inventor: **Nakazato, Yoshio c/o Tokyo Head Office Kawasaki**
**Steel Corporation, 2-3, Uchisaiwai-Cho 2-Chome**
**Chiyoda-Ku Tokyo(JP)**
Inventor: **Hoshino, Minoru c/o Chiba Works**
**Kawasaki Steel Corporation, 1, Kawasaki-Cho**
**Chiba City(JP)**
Inventor: **Yamamoto, Akira c/o Research Laboratories**
**Kawasaki Steel Corporation, 1, Kawasaki-Cho**
**Chiba City(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.08/2.19/2.0)

Inventor: **I, Kanji c/o Research Laboratories Kawasaki Steel Corporation, 1, Kawasaki-Cho Chiba City(JP)**

(74) Representative: **Overbury, Richard Douglas et al HASELTINE LAKE & CO Hazlitt House 28 Southampton Buildings Chancery Lane London WC2A 1AT(GB)**

## Description

This invention relates to a metal stripping system wherein an organic solvent, containing extracted metal ions, is mixed and contacted with a fluoride series stripping solution (an aqueous solution containing one or more of HF, $NH_4HF_2$, $NH_4F$; see Japanese Patents laid open No. 57-42,545 (EP-A-0046973), No. 57-73,138, No. 57-73,141 and No. 57-85,943 (EP-A-0052354)). to deposit crystals of a fluorinated metal complex and then the organic solvent, stripping solution and deposited crystals are individually recovered, and to a process for operating such a system.

Recently solvent extraction has become noted as a method for obtaining high-purity metal or metal oxide because it involves a simple purification step and requires small energy consumption. Metals which can, be extracted include Mg, Ti, Cr, Mn, Fe, Co, Ni, Cu, Zn, Cd, Nb, Zr, Ta, Mo, W, In and the like.

In conventional solvent extraction methods, the stripping (back-extraction) of the extracted metal ion has experienced problems, which have been solved by the use of a fluoride series stripping solution Further, there has been proposed a crystallization apparatus of an inverted frustocone structure for use in the solvent extraction in Japanese Patent laid open No. 58-81,402 (EP-A-0079246). However, such a crystallization apparatus has been used only on a laboratory scale and has not yet been put to practical use on an industrial scale.

The inventors of the present invention have made various studies in order to industrialise the crystallisation apparatus disclosed in Japanese Patent laid open No.58-81,402 (EP-A-0079246) and were the first to develop an industrial scale apparatus having a crystal production capability of 45 tons/month and being able to operate continuously for a long period of time. This work culminated in EP-A-0 157 562. However, when using such an apparatus, the nature and position of the chemicals fed to the circulating flow of the fluoride series stripping solution tend to give rise to troubles such as deposition of crystals inside the pipes or the pump, clogging of the pipes or pump and the like. In the comparable metal separation system shown in Fig.7 of the accompanying drawings, the above troubles are often produced during operation, as mentioned in the following comparative example, and this requires the operation of the system to be stopped.

It is an object of the present invention to provide a metal stripping system in which the required chemicals are fed to the system at a position such that clogging of the system by crystals is minimised so that continued operation can be carried out for as long as possible.

Accordingly a first aspect of the present invention provides a process of metal stripping which comprises

(i) introducing, to a mixing zone, a fluoride series stripping solution and an organic solvent containing extracted metal ions so that the solvent and solution are contacted together and the metal ions form a fluorinated metal complex;

(ii) allowing the mixed organic solvent and stripping solution to settle in settling zones;

(iii) precipitating the fluorinated metal complex as crystals;

(iv) cooling the resultant mixture of crystals and mother liquor in a cooling zone; and

(v) recovering the crystals as a metal or a metal oxide, characterised in that

the stripping solution is recycled and the concentration of $NH_4HF_2$ and HF in the stripping solution discharged from the settling zone is adjusted by

(vi) supplying an aqueous solution of $NH_4HF_2$ to the stripping solution cooling zone;

(vii) discharging stripping solution from the settling zone, contacting it with a gas produced by thermal decomposition of fluorinated metal complex crystals, and returning it to the mixing zone; and

(iix) supplying the mother liquor, after the separation of the crystals therefrom, to the settling zone for the stripping solution.

According to a second aspect of the present invention, there is provided a metal stripping system comprising

(i) a crystallisation apparatus for metal stripping and comprising an upper portion and a lower portion of inverted frustoconical shape, the apparatus including (a) in the upper portion a mixing zone for contacting an organic solvent containing extracted metal ions with a fluoride series stripping solution so that the metal ions form a fluorinated metal complex and settling zones disposed around the mixing zone for receiving organic solvent and stripping solution respectively from the mixing zone, (b) a zone below the stripping solution settling zone for precipitating crystals of the fluorinated metal complex from the stripping solution, and (c) in the lower portion a stripping solution cooling zone below the crystal precipitating zone for growing the crystals;

(ii) a tank connected so as to receive the crystals and mother liquor from the apparatus; and

(iii) a liquid-solid separation device for receiving the crystals and mother liquor from the tank and separating the crystals from the mother liquor characterised in that the system includes:

(iv) a device, connected so as to receive crystals from the liquid-solid separation device, for drying and thermally decomposing the crystals;

(v) an absorbing device to receive and absorb the decomposition gas produced in the drying and decomposing device;

(vi) a device for supplying an aqueous solution of $NH_4HF_2$ to the crystallisation apparatus; and

(vii) a device for measuring the concentration of the stripping solution, wherein said decomposition gas absorbing device is connected so as to receive stripping solution from the stripping solution settling zone of the apparatus, contact it with the decomposition gas and return it to the mixing zone; said $NH_4HF_2$ solution supply device is connected to the apparatus so as to supply $NH_4HF_2$ solution to the stripping solution cooling zone in the lower portion of the apparatus; and said liquid-solid separation device is connected to the apparatus so as to return said mother liquor to the settling zone for the stripping solution in the apparatus.

A diluted solution of an alkyl phosphoric acid or carboxylic acid extractant with n-paraffin can be used as the organic solvent for extracting the metal ions, while an aqueous solution containing one or more of $NH_4HF_2$, HF and $NH_4F$ is used as the fluoride series stripping solution. Particularly, according to the invention, the $NH_4HF_2$ solution and the fluorine series decomposition product and, if necessary, ammonia are supplied to the crystallisation apparatus at proper positions, respectively, and the concentration of the fluoride series stripping solution is preferably adjusted on the basis of two items viz total HF content and total $HH_4F$ content.

In the case where the metal ions are $Fe^{3+}$, the concentration of the stripping solution discharged from the settling zone should be adjusted so that the solution contains at least 85g/ℓ $NH_4HF_2$ (preferably from 85 to 115g/ℓ $NH_4HF_2$) and not more than 10g/ℓ HF.

The solvent extraction method using the apparatus of Japanese Patent laid open No.58-81402 consists mainly of extraction and stripping (back-extraction) stages. At these two stages, the working temperature is usually adjusted to be relatively high, or to be not excessively low, in order to enhance the extraction and back-extraction efficiencies.

If the working temperature is too low, the viscosity of the organic solvent increases and the handling thereof becomes somewhat difficult, and also the extraction or back-extraction efficiency and rate become lower. Particularly, as the stripping temperature in the metal stripping step becomes higher, the back-extraction rate of the metal ion increases and also the crystallisation conditions for the resulting fluoride compound become advantageous.

On the other hand, if the working temperature for the organic solvent is too high, deterioration of the organic solvent becomes a problem. That is, the deterioration of the organic solvent results from a certain chemical change or the like and becomes apparent as a reduction of metal extraction rate or the like. Especially, when the organic solvent is continuously contacted with a strong acid or stripping solution, the deterioration is caused by hydrolysis or the like even at room temperature. Also, the degree of deterioration becomes more conspicuous as the contacting temperature rises. In this connection, Japanese Patent laid open No.55-18,512 merely discloses that the deterioration of organic solvent for the extraction of mineral and (consisting of a neutral phosphate ester extractant and an aromatic hydrocarbon diluent) is suppressed by restricting the working temperature to not more than 30°C.

In accordance with a particularly preferred embodiment of the present invention, the temperature is controlled so as to prevent deterioration of the organic solvent without impairing the efficiency of extraction. More particularly, the temperature of the organic solvent supplied to the apparatus is kept at 20-25°C, the liquid temperature during the mixing of the organic solvent and the stripping solution is kept below 40°C, and the temperature of the stripping solution in the cooling zone is kept at 15-20°C. Particularly, the temperature of the organic solvent is adjusted to be 25-40°C inside the mixing and settling zones of the crystallisation apparatus and 10-30°C elsewhere inside the crystallisation apparatus, as well as in the pipes and tanks.

For a better understanding of the invention and to show how the same may be carried into effect, reference will now be made, by way of example, to the accompanying drawings, wherein:

Fig. 1 is a flow diagram for a system for metal stripping by solvent extraction using a circulating fluoride series stripping solution;

Fig. 2 is a schematic sectional view of an embodiment of a crystallisation apparatus for carrying out the metal stripping (back-extraction) step of the flow diagram of Fig. 1 as applied to iron stripping;

Figs. 3 to 6 are graphs showing solubility curves of $(NH_4)_3FeF_6$ in fluoride series stripping solutions containing 75-150 g/ℓ of $NH_4HF_2$ and 0-20 g/ℓ of HF, respectively;

Fig. 7 is a schematic view of a comparative apparatus known to the inventors for carrying out metal stripping in accordance with the flow diagram of Fig.

1; Figs. 8 and 9 are schematic views of apparatus according to the present invention for carrying out metal stripping in accordance with the flow diagram of Fig. 1;

Fig. 10 is a graph showing the relationship between the liquid temperature during the mixing of the two phases and the $Fe^{3+}$ extraction rate in the organic solvent after the mixing when carrying out iron stripping in accordance with the flow diagram of Fig. 1;

Fig. 11 is a graph showing the relationship between the temperature of the organic solvent during the mixing and contacting with an aqueous solution of nitric-hydrofluoric acid and the $Fe^{3+}$ extraction rate after the contacting when carrying out iron stripping in accordance with the flow diagram of Fig. 1;

Figs. 12 to 14 are neutralization titration curves (differential type) for the fluoride series stripping solution by means of a potentiometer titration device, respectively, which show measurement results on stripping solutions containing 100 g/ℓ of $NH_4HF_2$ and a varied amount (0, 10 and 20 g/ℓ ) of HF when carrying out metal stripping in accordance with the flow diagram of Fig, 1; and

Fig. 15 is an equiconductivity curve, as measured by an electromagnetic conductivity meter, of the fluoride series stripping solutions at 25°C when carrying out metal stripping in accordance with the flow diagram of Fig. 1.

The invention will be described in detail with reference to the drawings illustrating, by way of example, the case of $Fe^{3+}$ extraction, but it is not intended as a limitation to the metal ion and systems shown in the illustrated embodiments.

Fig. 1 is a flow diagram of the metal stripping system including the circulation step of the organic solvent and fluoride series stripping solution as used according to the invention. As shown in Fig. 1, an aqueous solution A containing metal ions is first mixed and contacted with an organic solvent S in a metal extraction step 1 whereby the metal ions are extracted from the aqueous solution A into the organic solvent S. The aqueous solution left after step 1 is a raffinate R, which is a recovered acid if A is a metal containing waste acid. When the metal ion in the aqueous solution A is $Fe^{3+}$ and the organic solvent S contains an ion exchange type extractant such as alkyl phosphoric acid or the like (which is abbreviated as HR hereinafter), the metal extraction is expressed by the following reaction formulae:

$$Fe^{3+} + 3HR \rightarrow FeR_3 + 3H^+ \quad (1)$$

$$FeF_2^{+} + 3HR \rightarrow FeR_3 + H^+ + 2HF \quad (2)$$

$$FeF_2^{+} + HR \rightarrow FeF_2R + H^+ \quad (3)$$

The reaction formulae (2) and (3) occur when using an iron-containing nitric-hydrofluoric acid waste liquid as the aqueous solution A, wherein $Fe^{3+}$ in the solution A mainly takes the ionic form $FeF_2^{+}$.

The organic solvent S containing the extracted metal ion is charged from step 1 to a metal stripping (back-extraction) step 2 where the organic solvent S is mixed and contacted with a warmed fluoride series stripping solution D to convert the metal ion into a fluorinated metal complex crystal X. When the metal ion is $Fe^{3+}$ and the stripping solution D is an aqueous solution consisting mainly of $NH_4HF_2$, the stripping (back-extraction) is expressed by the following reaction formulae:

$$FeR_3 + 3NH_4HF_2 \rightarrow 3HR + (NH_4)_3FeF_6 \downarrow \quad (4)$$

$$FeF_2R + 3NH_4HF_2 \rightarrow HR + (NH_4)_3FeF_6 \downarrow + 2HF \quad (5)$$

$$FeR_3 + 3NH_4HF_2 + 3NH_4F \rightarrow 3NH_4R + (NH_4)_3FeF_6 \downarrow + 3HF \quad (6)$$

After the stripping of the iron, a part of the extractant is in an ammonia form ($NH_4R$) as shown in reaction formula (6).

The stripping solution D containing the crystals X is discharged from step 2 and fed to a liquid-solid separation step 3 where the crystals X are separated from the stripping solution. After the separation of the crystals, the mother liquor is again circulated to the stripping step 2 for re-use.

The separated crystals X are fired in a drying-decomposition step 4 to produce a metal M or a metal oxide O. The metallic iron or iron oxide is produced from the fluorinated iron complex crystal $(NH_4)_3FeF_6$ by the following reaction formulae:

$(NH_4)_3FeF_6 + 3/2H_2 \rightarrow 3NH_4F + 3HF + Fe$ (7)

$(NH_4)_3FeF_6 + 3/4O_2 \rightarrow 3NH_4F + 3/2F_2 + 1/2Fe_2O_3$ (8)

A fluorine series decomposition gas G comprising $HH_4F$, HF, $F_2$ and the like, which is generated from step 4, is returned to the stripping solution D for reuse.

The organic solvent S, containing the extractant in ammonia form, is introduced from step 2 into a solvent conversion step 5 where it is contacted with an aqueous hydrochloric acid solution C to convert the ammonia form into a hydrogen form (HR) by the following reaction formula (9), which is returned into step 1 for re-use:

$NH_4R + HCl \rightarrow HR + NH_4Cl$ (9)

The aqueous hydrochloric acid solution C containing $NH_4Cl$ is fed from step 5 to an ammonia recovering step 6 where it is subjected to neutralization and distillation to recover an ammonia water E according to the following reaction formula:

$NH_4Cl + NaOH \rightarrow NH_4OH + NaCl$ (10)

The recovered ammonia water E (ammonia liquor) is returned into the stripping solution D for re-use, if necessary.

In connection with the concentration and composition of the fluoride series stripping solution D, the characteristic curve for the solubility of the fluorinated metal complex will be described taking the case of $(NH_4)_3FeF_6$ when the metal is $Fe^{3+}$.

Fig.2 shows an embodiment of a crystallisation apparatus 10 used in the iron stripping step 2. The organic solvent S containing extracted $Fe^{3+}$ is introduced into a mixing zone 13 in the upper portion of the apparatus 10 through a temperature regulator 11, while the fluoride series stripping solution D containing $NH_4HF_2$ or the like is introduced into the mixing zone 13 through a heating device 12. In the mixing zone 13, an iron-fluorine complex $(NH_4)_3FeF_6$ is produced by the iron stripping reaction as shown in the formulae (4), (5) and (6). After the iron stripping, the organic solvent is discharged via an outlet 15 from a settling zone 14.

Since the iron-fluorine complex has relatively small solubility in the stripping solution, it deposits as crystals during the continuation of the stripping. The stripping solution containing the resulting crystals descends downwards through a downpipe 16 and arrives at a stripping solution cooling zone (or a crystal growth zone) 17 in the frustoconical lower portion of the apparatus 10. This zone 17 is connected to a heat exchanger 18 and the like through pipes, whereby the warmed stripping solution is cooled to promote the growth of the crystals. If necessary, a forced circulation zone 19 is formed inside the zone 17 and connected to an external circulating pump so as to give fluidity to the stripping solution, whereby the adhesion of crystals to the inner wall of the apparatus and the accumulation and agglomeration of crystals at the bottom of the zone 17 can be prevented. The stripping solution is finally discharged from an outlet 21 through a crystal separation zone 20. On the other hand, the deposited crystals are properly discharged from an outlet 22 as a slurry, which is then subjected to liquid-solid separation.

The solubility curve of $(HH_4)_3FeF_6$ in the fluoride series stripping solution when operating the apparatus of Fig. 2 is shown in Figs. 3 to 6, wherein the concentrations of $NH_4HF_2$ and HF in the stripping solution are varied over the ranges 75-150 g/ℓ and 0-20 g/ℓ, respectively.

When $Fe^{3+}$ is stripped at the stripping step 2 according to the formula (4), $NH_4HF_2$ in the stripping solution D is consumed causing a decrease in the $NH_4HF_2$ concentration. On the other hand, when the aqueous solution A containing the metal ion is an iron containing nitric-hydrofluoric acid waste liquid and $Fe^{3+}$ is stripped according to formula (5), not only does the $NH_4HF_2$ concentration of the stripping solution D decrease, but also the HF concentration increases because $F^-$ transported from the organic solvent to the stripping solution forms HF. In any case, as is apparent from the solubility curves, the solubility of $(NH_4)_3FeF_6$ increases with a decrease in $NH_4HF_2$ concentration in the stripping solution D. This tendency becomes particularly conspicuous as the HF concentration increases.

Thus, the $NH_4HF_2$ concentration decreases with the progress of the metal stripping reaction, and when the metal ion is extracted as a fluoride ion, the HF concentration increases. Therefore, in order to circularly re-use the stripping solution, it is necessary to adjust the concentration and composition of the stripping solution.

If the cooling of the stripping solution is caused outside the crystallization apparatus, this is likely to produce unfavorable phenomenon for the operation of the apparatus such as deposition of $(NH_4)_3FeF_6$. Further, the stripping solution is cooled by atmospheric temperature in the cold season such as winter or the like or is at a cooled state when inside a pipe connected to the cooling zone even in the summer season. Therefore, the composition and concentration of the stripping solution need to be adjusted.

The chemicals and the like to be supplied for adjusting the concentration and composition of the circularly re-used fluoride series stripping solution D are as follows. In order to increase the $NH_4HF_2$ concentration, there are two methods. One of these is the addition of an aqueous solution of $NH_4HF_2$(the concentration is usually 30-40%) J and the other of which is the absorption of fluorine series decomposition gas G produced according to formulae (7) and (8) by the stripping solution in a suitable manner. Since the composition of the decomposition gas G produced according to formulae (7) and (8) substantially corresponds to the composition of $NH_4HF_2$, i.e. $NH_4F + HF$, the absorption of the decomposition gas G has substantially the same effect as the addition of the aqueous $NH_4HF_2$ solution J. Further, in order to decrease the HF concentration, it is sufficient to add ammonia water E or $NH_3$ gas to neutralize HF. The addition of ammonia E also contributes to the increase of $NH_4HF_2$ concentration as shown by the following equation:

$$HF + 1/2NH_3 \rightarrow 1/2NH_4HF_2 \qquad (11)$$

As mentioned above, the addition of the aqueous $NH_4HF_2$ solution J or the absorption of the fluorine series decomposition gas G increases the $NH_4HF_2$ concentration in the stripping solution D, while the addition of ammonia water or $NH_3$ gas E decreases the HF concentration and increases the $NH_4HF_2$ concentration in the stripping solution D. In any case, the supply of these chemicals acts to reduce the solubility of the fluorinated metal complex in the stripping solution.

Therefore, when the chemicals and the like for the concentration adjustment are supplied to the stripping solution D having an increased concentration of fluorinated metal complex as the metal stripping reaction progresses, the solubility of the fluorinated metal complex rapidly reduces to immediately deposit the fluorinated metal complex crystals X. As a result, when the location at which the chemicals are supplied is inappropriate, undesirable deposition of the crystals is caused to produce the aforementioned troubles such as clogging of the pipes and the like.

The supply location of the chemicals for the concentration adjustment will now be described with reference to the comparative metal stripping system as shown in Fig.7 as well as the metal stripping systems according to the present invention as shown in Figs.8 and 9. In these Figures, parts corresponding to parts of Fig.2 are denoted by like reference numerals.

The aqueous $NH_4HF_2$ solution J (30-40%) is added to the lower portion of the crystallisation apparatus 10. As shown in Figs. 8 and 9, this supply position 73 corresponds to that region of the crystallisation apparatus 10 where the fluorinated metal complex crystals X gradually grow. Therefore, the addition of the solution J at the position 73 causes crystal growth as a result of the concentration gradient of the stripping solution D as well as the temperature gradient thereof, whereby the crystal growth is accelerated. On the contrary, undesirable crystal deposition occurs at positions other than the position 73. In the case of the system of Fig.7, for example, the solution J is supplied to an absorbing liquid tank 62 in an absorbing device 60 for decomposition gas, but in this case the crystals X are deposited in the absorbing liquid tank 62 which results in the adhesion and clogging of the crystals X inside the absorbing liquid pump 63 and the decomposition gas absorbing tower 61 or the pipes connected therebetween. If the crystal receiving tank 30 is used as the supply position of the solution J, the mother liquor discharged from the crystal receiving tank 30 is supplied to settling zone 24 for stripping solution located beneath the settling zone 14 for organic solvent in the crystallization apparatus 10, so that the effect obtained by adding the solution J to the tank 30 is inferior compared to the case where the solution J is added to the lower portion of the apparatus 10.

Ammonia E may be added as ammonia water or $NH_3$ gas, if necessary. Preferably, ammonia liquor recovered from the ammonia recovering step 6 of Fig. 1 is used as the ammonia water. It is desirable that the ammonia is supplied to the lower portion of the crystallization apparatus 10 as shown in Fig. 8 or to the crystal receiving tank 30 as shown in Fig. 9. The reason why the ammonia E is supplied to the lower portion of the apparatus 10 is the same as in the case of adding the aqueous $NH_4HF_2$ solution J. On the other hand, when the ammonia E is supplied to the crystal receiving tank 30, the amount of HF in the stripping solution decreases as a result of neutralization, while the $NH_4HF_2$ increases by an amount corresponding to the decreased amount of HF so that crystals X are further deposited. Further, the mother liquor after the liquid-solid separation is suitable for use as a stripping solution to be supplied to the settling zone 24 of the apparatus 10 because the HF concentration is decreased. If the ammonia E is supplied at positions other than the above two positions, undesirable crystal deposition still occurs. For instance, the $NH_3$ gas E is supplied to the decomposition gas absorbing tower 61 in the absorbing device 60 for the decomposition gas in the comparative system of Fig.7, but in this case unfavourable deposition, adhesion and clogging of the crystals X are caused. A situation occurs which is similar to that occurring when the aqueous $NH_4HF_2$ solution J is added to the absorbing liquid tank 62.

Further, the fluorine series decomposition gas G is absorbed into the stripping solution discharged from the outlet 21 of the crystallisation apparatus 10 at the decomposition gas absorbing tower 61 and is then supplied to the mixing zone 13 of the apparatus 10. Even in the above preferred method there is a possibility of the crystals X depositing in cold conditions due to the increase in the $NH_4HF_2$ concentration in the discharged stripping solution. This possibility can be avoided by maintaining the concentration of $NH_4HF_2$ and HF in the discharged stripping solution within certain ranges.

According to Example 2 as mentioned later, the concentration of the stripping solution to ensure no deposition of $(NH_4)_3FeF_6$ crystals X at the outside of the crystallization apparatus under cold conditions is not less than 85 g/ℓ as $NH_4HF_2$ and not more than 10 g/ℓ as HF in the case where the waste acid is nitric-hydrofluoric acid. These concentration conditions correspond to a temperature gradient of not more than about 0.15 g/ℓ/°C at the low temperature region (not more than 20°C) of the solubility curve shown in Figs. 3 to 6. For instance, when using an organic solvent consisting of 30 V/V % of di-(2-ethylhexyl) phosphoric acid (hereinafter abbreviated as D2EHPA) and 70 V/V % of n-paraffin, the extracted $Fe^{3+}$ concentration in the organic solvent is within a range of about 12-20 g/ℓ. Furthermore, when the flow ratio of organic solvent S (organic phase) to stripping solution D (aqueous phase) in the supply to the crystallization apparatus, which is hereinafter referred to as O/A, is varied within the range of 1/3 to 2/3, the decrease of the $NH_4HF_2$ concentration in the stripping solution by the back-extraction reaction is within the range of 12.2-40.7 g/ℓ, so that the varying range of the $NH_4HF_2$ concentration is about 30 g/ℓ. Since the concentration range of $NH_4HF_2$ in the stripping solution discharged from the crystallization apparatus should be from 85-115 g/ℓ for $Fe^{3+}$ (see Example 2), it is sufficient to adjust the $NH_4HF_2$ concentration of the stripping solution contained in the crystallization apparatus within a range of 100±15 g/ℓ. In order to obtain a $NH_4HF_2$ concentration of more than 115 g/ℓ, the concentration to be supplied to the apparatus must be more than 130 g/ℓ, a concentration which is difficult to maintain economically.

Fig. 10 shows the relationship between the liquid temperature during the mixing of the two phases in the back extraction step (step 2) and the $Fe^{3+}$ extraction rate in the organic solvent as shown in the following Example 3. As is apparent from Fig. 10, the $Fe^{3+}$ extraction rate after the mixing becomes lower as the liquid temperature during the mixing becomes higher, which tends to deteriorate the organic solvent. Assuming that practicable four-stage mixer-settlers are used for iron extraction and the $Fe^{3+}$ extraction is performed at the same extraction rate in every stage, if the $Fe^{3+}$ extraction rate at each stage is not less than 68%, the overall $Fe^{3+}$ extraction rate is more than 99%. In this connection, the liquid temperature corresponding to a $Fe^{3+}$ extraction rate of 68% is 40°C, so that it is desirable to adjust the liquid temperature during the mixing of the two phases to be not more than 40°C. Moreover, the temperature of the organic solvent to be supplied to the apparatus is adjusted so as to obtain the desired liquid temperature during the mixing. The temperature of the organic solvent supplied is preferably from 20-25°C considering that it needs to be within a range of 25 to 40°C, in the mixing zone and that the range over which it can be adjusted by warming or cooling is 20°C. Therefore, in this case the temperature of the stripping solution to be supplied to the apparatus in a flow ratio (O/A) of 1/3-2/3 is within a range of 45-53°C.

Furthermore, the temperature of the stripping solution in the cooling zone is desirably held within a range of 15-20°C considering that the temperature adjusting range is within 20°C with respect to the atmospheric temperature (0-35°C). On the other hand, the back-extraction velocity and rate of $Fe^{3+}$ extraction become higher as the liquid temperature in the mixing chamber becomes higher so that the liquid temperature is maintained near 40°C as mentioned above. Therefore, the temperature distribution in the crystallization apparatus is held substantially constant throughout the year and the composition and concentration of the stripping solution are adjusted as previously mentioned, so that stable crystal deposition occurs according to the illustrated solubility curves and the continuous service of the apparatus is easily performed for a long period of time.

Fig. 11 shows the relationship between the temperature of the organic solvent during mixing with an aqueous solution of nitric-hydrofluoric acid in the metal extraction step (step 1) and the $Fe^{3+}$ extraction rate in the organic solvent as shown in the following Example 4, from which it is apparent that when the organic solvent temperature is more than 35°C, the reduction of the $Fe^{3+}$ extraction rate and hence the deterioration of the organic solvent becomes conspicuous. Therefore, it is desirable that the organic solvent temperature is not more than 30°C during the steps other than the metal stripping step (step 2).

Furthermore, Example 5 shows the results of $Fe^{3+}$ extraction from hydrochloric acid at low temperatures with the same organic solvent as in Examples 1 and 4. When the temperature is less than 10 °C, the viscosity of the organic solvent containing extracted $Fe^{3+}$ becomes higher, and a third phase is formed in the settler part of the $Fe^{3+}$ extraction mixer-settler. Therefore, it is desirable that the organic solvent temperature is not less than 10 °C, and the preferable temperature range is 10-30 °C during the steps other than the metal stripping step (step 1.)

As is apparent from the above, the working temperature of the organic solvent repeatedly used in the system should generally be within a range of 10-30 °C bearing in mind the deterioration of the organic solvent at higher temperatures and the production of the third phase at lower temperatures but it is preferably in a range of 25-40 °C in the mixing and settling zones of the crystallization apparatus itself bearing in mind the back-extraction efficiency and crystallization conditions.

Preferably, the temperature of the organic solvent supplied to the crystallization apparatus is maintained at 20-25 °C considering the atmospheric temperature. In this way the temperature condition inside the apparatus is substantially constant through the year whereby the operation of the metal stripping system can be stably performed.

By setting the working temperature of the organic solvent for metal extraction in the above mentioned ranges, the deterioration of the organic solvent due to elevated temperature can be prevented without damaging the efficiency of the metal stripping system.

According to the invention, the aqueous $NH_4HF_2$ solution, and optionally ammonia, are supplied to effective positions lying in a region extending from the lower portion of the crystallisation apparatus to the crystal receiving tank which region has no affect on the crystal deposition, while the fluorine series decomposition gas is absorbed into the discharged stripping solution for recycling to the mixing zone of the apparatus whereby the operation of the metal stripping step can continue smoothly as is apparent from the following Examples.

The invention will now be described with respect to the metal stripping system.

In Figs.7, 8 and 9 there are shown the fundamental structures of a metal stripping system operating in accordance with the flow diagram of Fig. 1. This system comprises the crystallisation apparatus 10 for metal stripping, the tank 30 for receiving the crystals, a liquid-solid separation device 40, a crystal drying and decomposition device 50, the absorbing device 60 for decomposition gas, a device 70 for supplying an aqueous solution of $NH_4HF_2$, a device 80 for supplying ammonia, and a device 90 for measuring the concentrations of the stripping solutions.

As the crystallisation apparatus 10 for the metal stripping, use may be made of the apparatus disclosed in the previously mentioned Japanese Patent laid open No.58-81,402, but it is preferable to use a crystallisation apparatus for metal stripping of the inverted frustocone type provided at its lower portion with a forced circulation zone 19 for stripping solution in the manner shown in Fig.2, which is described in EP-A-0 157 562. As the liquid-solid separation apparatus 40, use may be made of the filter 42 shown in Figs. 8 and 9 or a centrifugal separator. As the crystal drying and decomposition device 50, an assembly 51 comprising a crystal drying kiln and a crystal decomposition kiln or various furnaces can be adopted.

The decomposition gas absorbing device 60 comprises the decomposition gas absorbing tower 61, the absorbing liquid tank 62, the absorbing liquid pump 63, a stripping solution supply pump 64 and the like. This device 60 is connected to the stripping solution outlet 21 and to an inlet inside the mixing zone 13 in the crystallisation apparatus 10 through pipes and also the fluorine series decomposition gas G obtained from the crystal drying and decomposition kiln 51 is introduced into the device 60. The supply device 70 for aqueous $NH_4HF_2$ solution J comprises a tank 71, a pump 72, the outlet 73 and the like, wherein the outlet 73 is located at the lower portion of the crystallization apparatus 10 as shown in Figs. 8 and 9. The ammonia supply device 80 may be disposed according to the need, and comprises an ammonia water tank 81, a pump 82 and an outlet 85 as shown in Fig. 8 or an $NH_3$ gas holder 83, an $NH_3$ gas valve 84 and an outlet 85 as shown in Fig. 9. In this latter case, the outlet 85 opens into the lower portion of the crystallization apparatus 10 or into the crystal receiving tank 30. Since the deposition of the crystals X newly occurs near the outlet 73 for the aqueous $NH_4HF_2$ solution and the outlet 85 for ammonia, it is desirable that the stripping solution D is in a fluidized state at such areas. For this purpose, the forced circulation zone 19 is disposed in the lower portion of the crystallization apparatus 10 as previously mentioned, or a stirrer 31 is arranged in the crystal receiving tank 30.

The systems of Figs. 8 and 9 are preferred embodiments of the invention and are not intended as limitations thereof.

Next, the invention will be described with respect to the control of the concentration of the fluoride series stripping solution.

As previously mentioned, the fluoride series stripping solution D for separating the fluorinated metal complex crystals X from the organic solvent S containing the extracted metal ions by contacting together during the metal stripping step 2 is an aqueous solution of $NH_4HF_2$ and HF. Since the composition of $NH_4HF_2$ is the same as $NH_4F + HF$, it is effective to control the concentration and composition of the stripping solution D in terms of the total HF (hereinafter abbreviated as T.HF) and the total $NH_4F$ (hereinafter abbreviated as T.$NH_4F$). When the molar concentrations (mol/ℓ) of $NH_4HF_2$ and HF in the stripping solution D are $\underline{a}$ and $\underline{b}$, respectively, there are established the following relationships:

$$T.HF = \underline{a} + \underline{b} \quad (12)$$

$$T.NH_4F = \underline{a} \quad (13)$$

The measurement of T.HF and T.$NH_4F$ can be performed by a neutralization titration method using a potentiometric titration meter or by a combination of conductivity measurement using an electromagnetic conductivity meter with an analysis of the total fluorine (hereinafter abbreviated as T.F) using an ion electrode process as mentioned below.

In Figs. 12 to 14 there are shown neutralization titration curves (differential type) of the stripping solution D (1 mℓ) with an aqueous solution of N/2 NaOH as measured by the potentiometric titration meter, , wherein Fig. 12 represents the case of a stripping solution having $\underline{a}$ ($NH_4HF_2$ concentration) = 1.75 mol/ℓ = 100 g/ℓ and $\underline{b}$ (HF concentration) = 0 mol/ℓ = 0 g/ℓ, Fig. 13 represents the case of a stripping solution having $\underline{a}$ = 1.75 mol/ℓ = 100 g/ℓ and $\underline{b}$ = 0.50 mol/ℓ = 10 g/ℓ, and Fig. 14 represents the case of a stripping solution having $\underline{a}$ = 1.75 mol/ℓ = 100 g/ℓ and $\underline{b}$ = 1.00 mol/ℓ = 20 g/ℓ. As seen from Figs. 12 to 14, two main peaks appear in each titration curve. When both the concentrations are calculated by assigning a region from the beginning of titration (0 ml) to the first peak and a region from the first peak to the second peak to T.HF and T.$NH_4F$, respectively, the calculated values are well coincident with the T.HF and T.$NH_4F$ concentrations measured from $\underline{a}$ and $\underline{b}$ values in the equations (12) and (13). Therefore, the values of T.HF and T.$NH_4F$ are measured from the neutralization titration curve, from which the values of $\underline{a}$ and $\underline{b}$ can be found by the following equations:

$$\underline{a} = T.NH_4F \quad (14)$$

$$\underline{b} = T.HF - T.NH_4F \quad (15)$$

Fig. 15 shows equiconductivity curves based on values of the electric conductivity C in stripping solutions D having various values of $\underline{a}$ and $\underline{b}$ at 25 °C as measured by the electromagnetic conductivity meter, wherein the abscissa is the T.HF value and the ordinate is the T.$NH_4F$ value. The equiconductivity curves are slightly downward to the right. When the electric conductivity C is measured by the electromagnetic conductivity meter and the value of T.F is analyzed, for example, by an ion electrode process, the T.HF and T.$NH_4F$ values of the stripping solution D can be measured as follows. For instance, when C = 160 mS/cm and T.F = 3.00 mol/ℓ, if normal lines are drawn from an intersection of the curve of C = 160 mS/cm with the line segment XY of T.F = 3.00 mol/ℓ to the abscissa and ordinate in Fig. 15, the values at the intersections with the co-ordinates correspond to the T.HF and T.$NH_4F$ values of the stripping solution D.

Strictly speaking, a fluorinated metal ammonium complex is dissolved in the stripping solution D. For example, when the metal ion is $Fe^{3+}$, the stripping solution D is a solution of $NH_4HF_2$-HF-$(NH_4)_3FeF_6$. In general, however, the fluorinated metal ammonium complex has relatively small solubility in the stripping solution D, so that the dissolved amount of the fluorinated metal ammonium complex hardly influences the analysis and the measurement. Therefore, the stripping solution D can be considered as $NH_4HF_2$-HF solution in order to determine the T.HF and T.$NH_4F$ values.

As mentioned above, the concentration and composition of the fluoride series stripping solution can be controlled by measuring the values of T.HF and T.$NH_4F$ according to any one of the aforementioned two methods. The neutralization titration method can directly measure the values of T.HF and T.$NH_4F$, so that it is very convenient but its measurement is intermittent. On the other hand, the combination of conductivity measurement and total fluorine analysis can continuously control the concentration and composition of the stripping solution because the conductivity measurement is continuous even if the total fluorine analysis is performed intermittently.

In the system according to the invention as shown in Figs.8 and 9, the concentration and composition of the stripping solution D is measured at three locations i.e. a measuring location 91 for the supplied stripping solution, a measuring location 92 for the discharged stripping solution and a measuring location 93 for the mother liquor after the separation of the crystals. At these measuring locations, the concentration and composition of the stripping solution are properly determined within the controlling ranges while measuring the T.HF and T.$NH_4F$ values, whereby the required chemicals may be supplied to the crystallisation apparatus as appropriate.

As previously mentioned in detail, the concentration of the fluoride series stripping solution is controlled in terms of T.HF and T.$NH_4F$ to enable the supply of the necessary chemicals at proper positions in the crystallisation apparatus whereby the stable operation of the metal stripping system can be realised over a long period while preventing the occurrence of troubles such as the clogging of pipes and the like.

The following Examples are given by way of illustration of the invention and are not intended as limitations thereof.

Comparative Example

With the comparative metal stripping system shown in Fig. 7, the separation of $Fe^{3+}$ extracted in an organic solvent consisting of 30 V/V % of D2EHPA and 70 V/V % of n-paraffin was carried out at a rate of 45 tons/month as crystals of $(NH_4)_3FeF_6$. In the crystallization apparatus 10 for metal stripping, the liquid temperature inside the mixing chamber 13 was adjusted to 30-40 °C, and the liquid temperature inside the cooling zone 17 was adjusted to 15-20 °C. Then, in order to adjust the concentration and composition of the stripping solution to 85-115 g/ℓ of $NH_4HF_2$ and 0-10 g/ℓ of HF at the measuring location 92, a 30% aqueous solution of $NH_4HF_2$ was added from the outlet 73 to the absorbing liquid tank 62. In 24 hours after the beginning of the addition, $(NH_4)FeF_6$ crystals deposited in the absorbing liquid tank 62 adhered to the insides of the pump 63 and the decomposition gas absorbing tower 61 to cause clogging thereof, resulting in the cessation of operations. Further, when $NH_3$ gas E was added to the decomposition gas absorbing tower 61 apart from the $NH_4HF_2$ solution J, clogging with $(NH_4)_3FeF_6$ crystals still occurred inside the pump 63 and the tower 61.

Example 1

With the system according to the invention shown in Fig. 9, iron separation was carried out under substantially the same conditions as in the Comparative Example. In order to maintain the concentration and composition of the stripping solution D at the measuring location 92 within the same range as in the Comparative Example, the 30% aqueous solution of $NH_4HF_2$ was adequately supplied to the forced circulation zone 19 of the stripping solution cooling zone 17 of the crystallisation apparatus 10. Even after 30 days of operation, there was observed no deposition and clogging of $(NH_4)_3FeF_6$ crystals due to the addition of the $NH_4HF_2$ solution J.

Apart from the $NH_4HF_2$ solution J, ammonia E was properly added to the lower portion of the crystallisation apparatus 10 as ammonia water (Fig.8) or to the crystal receiving tank 30 as $NH_3$ gas (Fig.9). Even in this case, the deposition and clogging of $(NH_4)_3FeF_6$ crystals due to the addition of ammonia E was not observed after 30 days of operation.

Example 2

The separation of $Fe^{3+}$ from nitric-hydrofluoric acid waste liquid was carried out in the crystallisation apparatus 10 for metal stripping having a $(NH_4)_3FeF_6$ crystal production capability of 45 tons/month as shown in Fig.2. In this case, an organic solvent S consisting of 30 V/V% of D2EHPA and 70 V/V% of n-paraffin and containing 14.9-19.5 g/l of the extracted $Fe^{3+}$ was charged into the mixing chamber 13 at a rate of 2 $m^3$/hr, while the stripping solution D containing 65-131 g/l of $NH_4HF_2$ and 0-20 g/l of HF was charged into the mixing zone 13 at a rate of 3.5 $m^3$/hr (O/A = 1/1.75). The temperature of the organic solvent supplied was adjusted to 20-23 °C, and the temperature of the stripping solution supplied was adjusted to 45-50 °C. Also, the temperature of the stripping solution in the cooling zone 17 was adjusted to 15-20 °C. As regards the concentration and composition of the stripping solution discharged from the apparatus 10, the $NH_4HF_2$ content was 54-126 g/ℓ and the HF content was 0-25 g/ℓ. The depositing state of crystals inside the pipes connected to the cooling zone is shown in the following table.

| Run No. | Concentration of stripping solution discharged | | Deposition of crystal inside pipes |
|---|---|---|---|
| | $NH_4HF_2$ (g/ℓ) | HF (g/ℓ) | |
| 1 | 54 | 3 | presence |
| 2 | 90 | 0 | none |
| 3 | 104 | 8 | nearly none |
| 4 | 115 | 12 | presence |
| 5 | 85 | 21 | some presence |
| 6 | 104 | 25 | some presence |
| 7 | 94 | 13 | presence |
| 8 | 82 | 15 | presence |
| 9 | 87 | 8 | nearly none |
| 10 | 80 | 7 | presence |
| 11 | 110 | 3 | none |
| 12 | 126 | 0 | none |

As apparent from the above table, there is hardly any deposition of crystals inside the pipes when $NH_4HF_2$ is not less than 85 g/ℓ and HF is not more than 10 g/ℓ.

Example 3

The same organic solvent S as used in Example 1 (about 20°C) was mixed and contacted with a stripping solution D containing 125 g/ℓ of $NH_4HF_2$ (20-50°C) at a rate (O/A) of 1/3 by a batch process for 1 hour. Then, the extractant in the organic solvent was treated with an aqueous solution of HCℓ to convert the $NH_4^+$ form into the $H^+$ form. Subsequently, the organic solvent containing the $H^+$ form extractant was contacted with nitric-hydrofluoric acid waste liquid containing 32.2 g/ℓ of $Fe^{3+}$ and 45 g/ℓ of HF at a rate (O/A) of 1.5 and the $Fe^{3+}$ extraction rate was measured. As seen from the results of Fig. 10, the $Fe^{3+}$ extraction rate became lower as the temperature of the stripping solution increased.

Example 4

After the organic solvent having the same composition as in Example 1 and containing no metal ion was mixed and contacted with an aqueous solution of nitric-hydrofluoric acid (180 g/ℓ $NHO_3$ + 40 g/ℓ HF) at 20-45°C and a rate (O/A) of 1.5 by a batch process for 24 hours, it was contacted with the same nitric-hydrofluoric acid waste liquid as in Example 1 at a rate (O/A) of 1.5 and the $Fe^{3+}$ extraction rate was measured. As seen from the results of Fig. 11, the $Fe^{3+}$ extraction rate lowers considerably as the temperature of the organic solvent during the mixing becomes higher.

Example 5

The same organic solvent as in Example 4 and hydrochloric acid waste liquid containing completely oxidized $Fe^{2+}$ ($Fe^{3+}$ = 90.5 g/ℓ, HCℓ = 64.8 g/ℓ) were charged into a one-stage mixer-settler having a size of 100 mm × 100 mm × 200 mm (height) at flow rates of 5 ℓ/hr and 1 ℓ/hr, respectively and were mixed by means of a stirrer revolving at 800 rpm to perform $Fe^{3+}$ extraction. This procedure was repeated three times by adjusting the liquid temperature during the mixing to 6.5°C, 10.8°C and 14.3°C on average, respectively. The formation of the third phase in the settler part was observed in the case of the liquid temperature of 6.5°C but was hardly observed at the liquid temperatures of 10.8°C and 14.3°C.

**Claims**

**1.** A process of metal stripping which comprises

(i) introducing, to a mixing zone (13), a fluoride series stripping solution (aqueous solution containing one or more of HF, $NH_4HF_2$, $NH_4F$) and an organic solvent containing extracted metal ions so that the organic solvent and fluoride series stripping solution are contacted together and the metal ions form a fluorinated metal complex;
(ii) allowing the mixed organic solvent and fluoride series stripping solution to settle respectively in a settling zone (14), for organic solvent and a settling zone (24) for stripping solution
(iii) precipitating the fluorinated metal complex as crystals;
(iv) cooling the resultant mixture of crystals and mother liquor in a cooling zone (17); and
(v) recovering the crystals as a metal or a metal oxide, characterised in that
the fluoride series stripping solution is recycled and the concentration of $NH_4HF_2$ and HF in this stripping solution is adjusted by
(vi) supplying an aqueous solution of $NH_4HF_2$ to the cooling zone (17);
(vii) discharging stripping solution from the settling zone (24) for stripping solution, contacting it with a gas produced by thermal decomposition of fluorinated metal complex crystals, and returning it to the mixing zone (13); and
(iix) supplying the mother liquor, after the separation of the crystals therefrom, to the settling zone (24) for the stripping solution.

**2.** A process according to claim 1 wherein the metal ions are $Fe^{3+}$ ions and the concentration of the stripping solution discharged from the settling zone (24) for stripping solution is adjusted so that the solution contains at least 85 g/ℓ $NH_4HF_2$ and not more than 10 g/ℓ HF.

**3.** A process according to claim 2 wherein the concentration of the stripping solution discharged from the settling zone (24) for stripping solution is adjusted to be from 85 to 115 g/ℓ $NH_4HF_2$.

**4.** A process according to claim 1, 2 or 3 wherein the concentration of said fluoride series stripping solution is adjusted in dependence on the total HF and total $NH_4F$ contents.

**5.** A process according to any preceding claim wherein ammonia is supplied to the mixture of crystals and mother liquor.

**6.** A process according to any preceding claim wherein the temperature of the organic solvent is adjusted to be 25-40°C in the mixing and settling zones and to be 10-30°C elsewhere.

**7.** A process according to claim 6 wherein the temperature of the stripping solution in the cooling zone is from 15 to 20°.

**8.** A metal stripping system comprising
(i) a crystallisation apparatus (10) for metal stripping and comprising an upper portion and a lower portion of inverted frustoconical shape, the apparatus including (a) in the upper portion a mixing zone (13) for contacting an organic solvent containing extracted metal ions with a fluoride series stripping solution (aqueous solution containing one or more of HF, $NH_4HF_2$, $NH_4F$) so that the metal ions form a fluorinated metal complex and settling zones (14,24) disposed around the mixing zone (13) for receiving organic solvent and stripping solution respectively from the mixing zone (13), (b) a zone (20) below the stripping solution settling zone (24) for precipitating crystals of the fluorinated metal complex from the stripping solution, and (c) in the lower portion a cooling zone (17) below the crystal precipitating zone (20) for growing the crystals;
(ii) a tank (30) connected so as to receive the crystals and mother liquor from the apparatus; and
(iii) a liquid-solid separation device (40) for receiving the crystals and mother liquor from the tank (30) and separating the crystals from the mother liquor characterised in that the system includes:
(iv) a device (50), connected so as to receive crystals from the liquid-solid separation device (40), for drying and thermally decomposing the crystals;
(v) an absorbing device (60) to receive and absorb the decomposition gas produced in the drying and decomposing device (50);
(vi) a device (70) for supplying an aqueous solution of $NH_4HF_2$ to the crystallisation apparatus (10); and

(vii) a device (90) for measuring the concentration of HF, $NH_4HF_2$ and $NH_4F$ in the stripping solution, wherein said decomposition gas absorbing device (60) is connected so as to receive stripping solution from the stripping solution settling zone of the apparatus (10), contact it with the decomposition gas and return it to the mixing zone (13); said $NH_4HF_2$ solution supply device (70) is connected to the apparatus (10) so as to supply $NH_4HF_2$ solution to the stripping solution cooling zone (17) in the lower portion of the apparatus (10); and said liquid-solid separation device (40) is connected to the apparatus (10) so as to return said mother liquor to the settling zone (24) for the stripping solution in the apparatus (10).

**9.** A system according to claim 8, which further comprises a device (80) connected so as to supply ammonia to said stripping solution cooling zone (17) of the crystallisation apparatus (10), to said crystal receiving tank (30), or to the system at any location between said stripping solution cooling zone (17) of the crystallisation apparatus (10) and said crystal receiving tank (30).

## Revendications

**1.** Un procédé d'extraction de métaux qui consiste à :

(i) introduire, dans une zone de mélange (13), une solution d'extraction à base de fluorure (solution aqueuse contenant un ou plusieurs des produits HF, $NH_4HF_2$, $NH_4F$) et un solvant organique contenant des ions de métaux extraits de telle sorte que le solvant organique et la solution d'extraction à base de fluorure soient mis en contact mutuellement et que les ions métalliques forment un complexe métallique fluoré ;

(ii) laisser le mélange de solvant organique et de solution d'extraction à base de fluorure se déposer respectivement dans une zone de dépôt (14) pour le solvant organique et une zone de dépôt (24) pour la solution d'extraction ;

(iii) précipiter le complexe métallique fluoré sous forme de cristaux ;

(iv) refroidir le mélange résultant de cristaux et de liqueur mère dans une zone de refroidissement ; et

(v) récupérer les cristaux sous forme d'un métal ou d'un oxyde métallique, caractérisé en ce que : - la solution d'extraction à base de fluorure est recyclée et la concentration de $NH_4HF_2$ et HF dans cette solution d'extraction est ajustée :

(vi) en introduisant une solution aqueuse de $NH_4HF_2$ dans la solution de refroidissement (17 ) ;

(vii) en évacuant la solution d'extraction de la zone de dépôt (24) pour la solution d'extraction, en la faisant entrer en contact avec un gaz produit par décomposition thermique de cristaux du complexe métallique fluoré et en la renvoyant dans la zone de mélange (13);

(viii) en introduisant la liqueur mère, après qu'elle a été séparée des cristaux, dans la zone de dépôt (24) pour la solution d'extraction.

**2.** Un procédé selon la revendication 1, dans lequel les ions métalliques sont des ions $Fe^{3+}$ et la concentration de la solution d'extraction évacuée de la zone de dépôt (24) pour la solution d'extraction est ajustée de telle sorte que la solution contienne au moins 85 g/ℓ de $NH_4HF_2$ et pas plus de 10 g/ℓ de HF.

**3.** Un procédé selon la revendication 2, dans lequel la concentration de la solution d'extraction évacuée de la zone de dépôt (24) pour la solution d'extraction est ajustée de façon à être comprise entre 85 et 115 g/ℓ de $NH_4HF_2$.

**4.** Un procédé selon la revendication 1, 2 ou 3, dans lequel la concentration de ladite solution d'extraction à base de fluorure est ajustée en fonction de la teneur totale en HF et de la teneur totale en $NH_4F$.

**5.** Un procédé selon une quelconque des revendications précédentes, dans lequel de l'ammoniaque est introduite dans le mélange de cristaux et de liqueur mère.

**6.** Un procédé selon une quelconque des revendications précédentes, dans lequel la température du solvant organique est ajustée à 25-40 ° C dans les zones de mélange et de dépôt et à 10-30 ° C ailleurs.

**7.** Un procédé selon la revendication 6, dans lequel la température de la solution d'extraction dans la zone de refroidissement est comprise entre 15 et 20 ° C.

8. Un système d'extraction de métaux comprenant:

(i) un appareil de cristallisation (10) pour extraction de métaux, qui comprend une partie supérieure et une partie inférieure ayant une forme tronconique inversée, l'appareil comprenant (a) dans la partie supérieure une zone de mélange (13) pour faire entrer en contact un solvant organique contenant des ions de métaux extraits avec une solution d'extraction à base de fluorure (solution aqueuse contenant un ou plusieurs des produits HF, $NH_4HF_2$, $NH_4F$) de telle sorte que les ions métalliques forment un complexe métallique fluoré et des zones de dépôt (14, 24) disposés autour de la zone de mélange (13) pour recevoir respectivement le solvant organique et la solution d'extraction provenant de la zone de mélange (13), (b) une zone (20) située en dessous de la zone (24) de dépôt de solution d'extraction pour précipiter des cristaux du complexe métallique fluoré provenant de la solution d'extraction, et(c) dans la partie inférieure une zone de refroidissement (17) située en dessous de la zone de précipitation de cristaux (20) pour un grossissement des cristaux ;

(ii) une cuve (30) raccordée de façon à recevoir les cristaux et la liqueur mère provenant de l'appareil; et

(iii) un dispositif (40) de séparation liquide-solide pour recevoir les cristaux et la liqueur mère provenant de la cuve et pour séparer les cristaux de la liqueur mère,

- caractérisé en ce que le système comprend :

(iv) un dispositif (50), raccordé de façon à recevoir des cristaux provenant du dispositif (40) de séparation liquide-solide, pour sécher et décomposer thermiquement les cristaux ;

(v) un dispositif d'absorption (60) pour recevoir et absorber le gaz de décomposition produit dans le dispositif (50) de séchage et de décomposition ;

(vi) un dispositif (70) pour introduire une solution aqueuse de $NH_4HF_2$ dans l'appareil de cristallisation (10) ; et

(vii) un dispositif (90) pour mesurer la concentration de la HF, $NH_4HF_2$ et $NH_4F$ dans la solution d'extraction, où ledit dispositif (60) d'absorption de gaz de décomposition est raccordé de façon à recevoir la solution d'extraction provenant de la zone de dépôt de solution d'extraction de l'appareil (10) pour la faire entrer en contact avec le gaz de décomposition et à la renvoyer dans la zone de mélange (13) ; le dispositif (70) d'introduction de solution de $NH_4HF_2$ est raccordé à l'appareil de façon à introduire la solution de $NH_4HF_2$ dans la zone (17) de refroidissement de solution d'extraction située dans la partie inférieure de l'appareil (10) ; et ledit dispositif (40) de séparation liquide-solide est raccordé à l'appareil (10) de façon à renvoyer la liqueur mère dans la zone de dépôt (24) pour la solution d'extraction dans l'appareil (10).

9. Un système selon la revendication 8, qui comprend en outre un dispositif (80) raccordé de façon à introduire de l'ammoniaque dans ladite zone (17) de refroidissement de solution d'extraction de l'appareil de cristallisation (10), dans ladite cuve (30) de réception de cristaux ou dans le système en un endroit quelconque entre ladite zone (17) de refroidissement de solution d'extraction de l'appareil de cristallisation (10) et ladite cuve (30) de réception de cristaux.

## Patentansprüche

1. Verfahren zum Metallstrippen, welches folgendes umfaßt:

(i) Einführen einer Fluoridserienstripplösung (wässerige Lösung, die eines oder mehrere von HF, $NH_4$, $HF_2$, $NH_4F$ enthält) und eines extrahierte Metallionen enthaltenden, organischen Lösungsmittels in eine Mischzone (13), so daß das organische Lösungsmittel und die Fluoridserienstripplösung miteinander in Berührung gebracht werden und die Metallionen einen fluorinierten Metallkomplex bilden,

ii) jeweiliges Absetzenlassen des gemischten organischen Lösungsmittels und der Fluoridserienstripplösung in einer Absetzzone (14) für das organische Lösungsmittel und einer Absetzzone (24) für die Stripplösung,

(iii) Ausfällen des fluorinierten Metallkomplexes in der Form von Kristallen,

(iv) Abkühlen der sich ergebenden Mischung von Kristallen und Mutterlauge in einer Kühlzone (17), und

(v) Gewinnen der Kristalle als Metall oder Metalloxid,

dadurch gekennzeichnet, daß

die Fluoridserienstripplösung im Kreislauf geführt wird und die Konzentration von $NH_4HF_2$ und HF in

dieser Stripplösung eingestellt wird, indem

(vi) eine wässerige Lösung $NH_4HF_2$ der Kühlzone (17) zugeführt wird,
(vii) aus der Absetzzone (24) für die Stripplösung Stripplösung abgeführt wird, die mit einem durch thermische Zersetzung von fluorinierten Metallkomplexkristallen gebildeten Gas in Berührung gebracht wird, und
diese in die Mischzone (13) zurückgeführt wird, und
iix) die Mutterlauge nach Trennung der Kristalle von dieser in die Absetzzone (24) für die Stripplösung geführt wird.

**2.** Verfahren nach Anspruch 1, dadurch gekennzeichnet, daß die Metallionen $Fe^{3+}$-Ionen sind und die Konzentration der Stripplösung, die aus der Absetzzone (24) für die Stripplösung abgeführt wird, so eingestellt wird, daß die Lösung mindestens 85 g/l $NH_4HF_2$ und nicht mehr als 10 g/l HF enthält.

**3.** Verfahren nach Anspruch 2, dadurch gekennzeichnet, daß die Konzentration der aus der aus der Absetzzone (24) für die Stripplösung abgeführten Stripplösung auf 85 bis 115 g/l eingestellt wird.

**4.** Verfahren nach Anspruch 1, 2 oder 3, dadurch gekennzeichnet, daß die Konzentration der Fluoridserienstripplösung in Abhängigkeit von dem gesamten HF- und dem gesamten $NH_4F$-Inhalt eingestellt wird.

**5.** Verfahren nach einem der vorhergehenden Ansprüche, dadurch gekennzeichnet, daß Ammoniak der Mischung von Kristallen und der Mutterlauge zugeführt wird.

**6.** Verfahren nach einem der vorhergehenden Ansprüche, dadurch gekennzeichnet, daß die Temperatur des organischen Lösungsmittels auf 25 - 40 °C in der den Misch- und Absetzzonen und auf 10 - 30 °C anderswo eingestellt wird.

**7.** Verfahren nach Anspruch 6, dadurch gekennzeichnet, daß die Temperatur der Stripplösung in der Kühlzone von 15 bis 20 °C beträgt.

**8.** Metallstrippsystem, welches folgendes umfaßt:
(i) eine Kristallisationsvorrichtung (10) für das Metallstrippen, welche einen oberen Teil und einen unteren Teil von invertierter kegelstumpfförmiger Form aufweist, wobei die Vorrichtung (a) in dem oberen Teil eine Mischzone (13) für das Inberührungbringen eines extrahierte Metallionen enthaltenden, organischen Lösungsmittels mit einer Fluoridserienstripplösung (wässerige Lösung, die eines oder mehrere von HF, $NH_4HF_2$, $NH_4F$ enthält), so daß die Metallionen einen fluorinierten Metallkomplex bilden und Absetzzonen (14, 24), die um die Mischzone (13) herum angeordnet sind, um organischen Lösungsmittel bzw. Stripplösung von der Mischzone (13) aufzunehmen, b) eine Zone (20) unterhalb der Stripplösungabsetzzone (24) zur Ausfällung von Kristallen des fluorinierten Metallkomplxes aus der Stripplösung und c) eine Kühlzone (17) unterhalb der Kristallausfällungszone (20) im unteren Teil für das Wachsen der Kristalle, umfaßt;
(ii) einen Tank (30) der zu verbunden ist, um die Kristalle und die Mutterlauge von der Vorrichtung aufzunehmen; und
(iii) eine Flüssigkeits-Feststoff-Trennvorrichtung (40) für die Aufnahme der Kristalle und der Mutterlauge aus dem Tank (30) und der Trennung der Kristalle von der Mutterlauge,
dadurch gekennzeichnet, daß
das System folgendes umfaßt:
(iv) eine Vorrichtung (50), die so verbunden ist, um Kristalle aus der Flüssigkeits-Feststoff-Trennvorrichtung (40) aufzunehmen, um die Kristalle zu trocknen und thermisch zu zersetzen,
(v) eine Absorptionsvorrichtung (60) um das in der Trocknungs- und Zersetzungsvorrichtung (50) erzeugte Gas aufzunehmen und zu absorbieren,
(vi) eine Vorrichtung (80), um der Kristallisationsvorrichtung (10) eine wässerige Lösung von $NH_4HF_2$ zuzuführen, und
(vii) eine Vorrichtung (90), um die Konzentration von HF, $NH_4HF_2$ und $NH_4F$ in der Stripplösung zu messen, in welcher die das Zersetzungsgas absorbierende Vorrichtung (60) verbunden ist, um die Stripplösung aus der Stripplösungsabsetzzone der Vorrichtung (10) aufzunehmen, sie mit dem Zersetzungsgas in Berührung zu bringen und sie in die Mischzone (13) zurückzuführen, wobei die $NH_4HF_2$-Lösungszuführungsvorrichtung (70) mit der Vorrichtung (10) verbunden ist, um der Stripplösungskühlzone (17) in dem unteren Teil der Vorrichtung (10) $NH_4HF_2$-Lösung zuzuführen und die Flüssigkeit-Feststoff-Trennvorrichtung (40) mit der Vorrichtung (10) verbunden ist, um die Mutterlauge in die Absetzzone (24) für die Stripplösung in der Vorrichtung (10) zurückzuführen.

**9.** System nach Anspruch 8, dadurch gekennzeichnet, daß es weiterhin eine Vorrichtung (80) umfaßt, die verbunden ist, um der Stripplösungskühlzone (17) der Kristallisationsvorrichtung, dem Kristalaufnahmetank (30) oder dem System an irgendeiner Stelle zwischen der Stripplösungskühlzone (17) der Kristallisationsvorrichtung (10) und dem Kristallaufnahmetank (30) Ammoniak zuzuführen.

FIG. 1

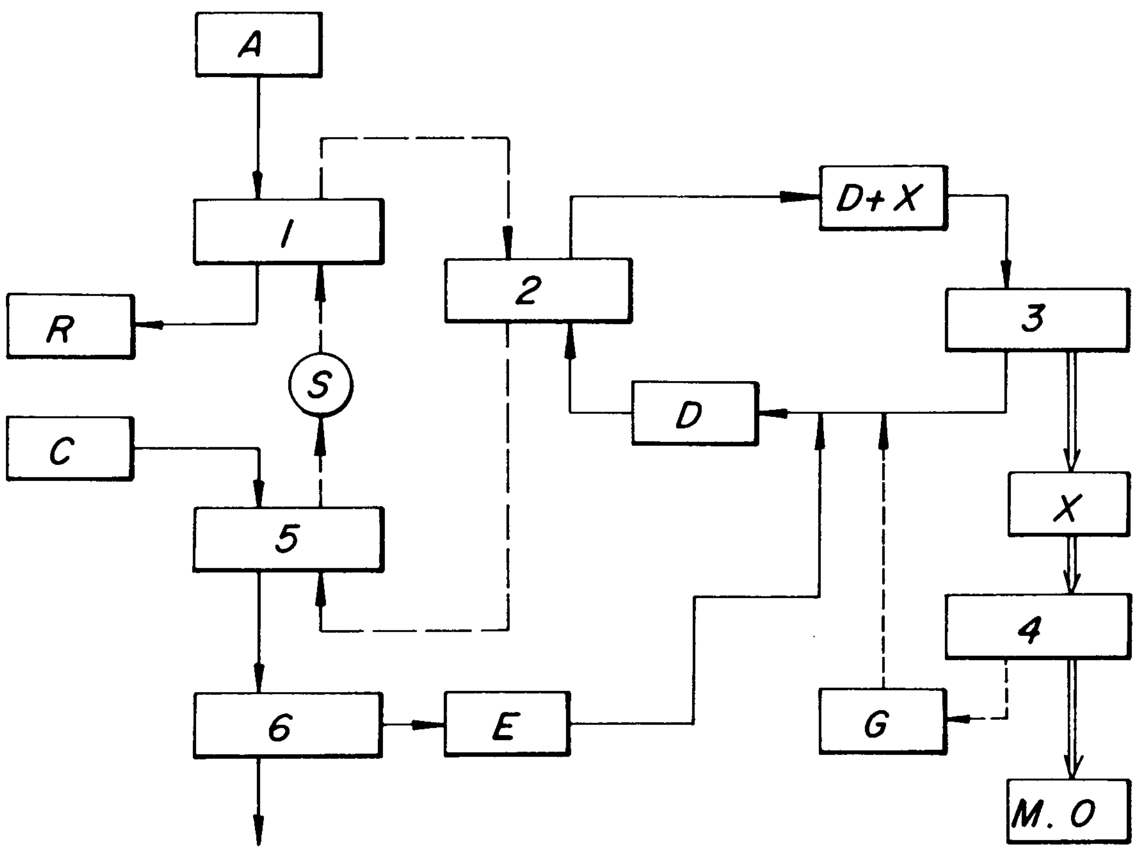

FIG. 2

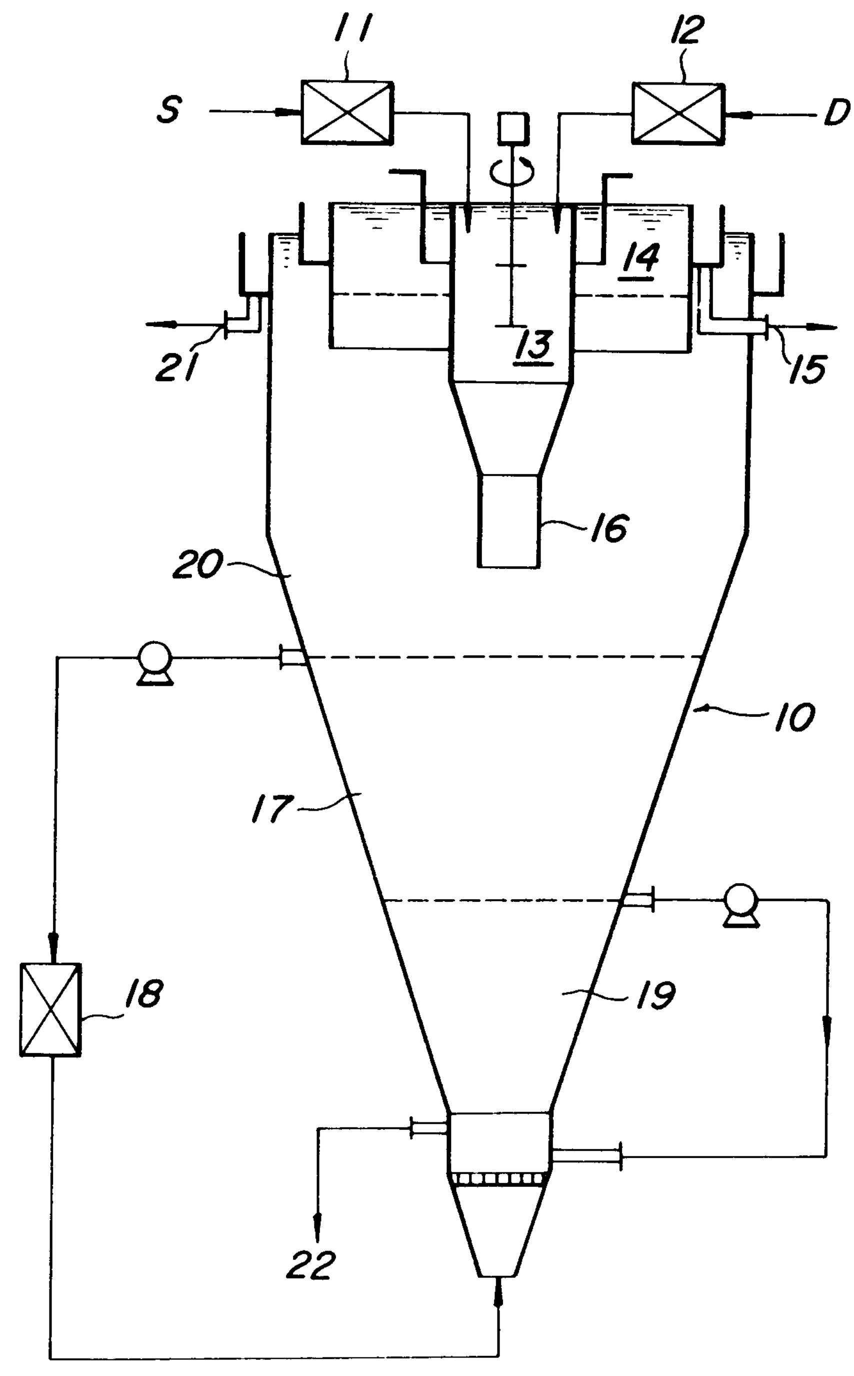

FIG. 3

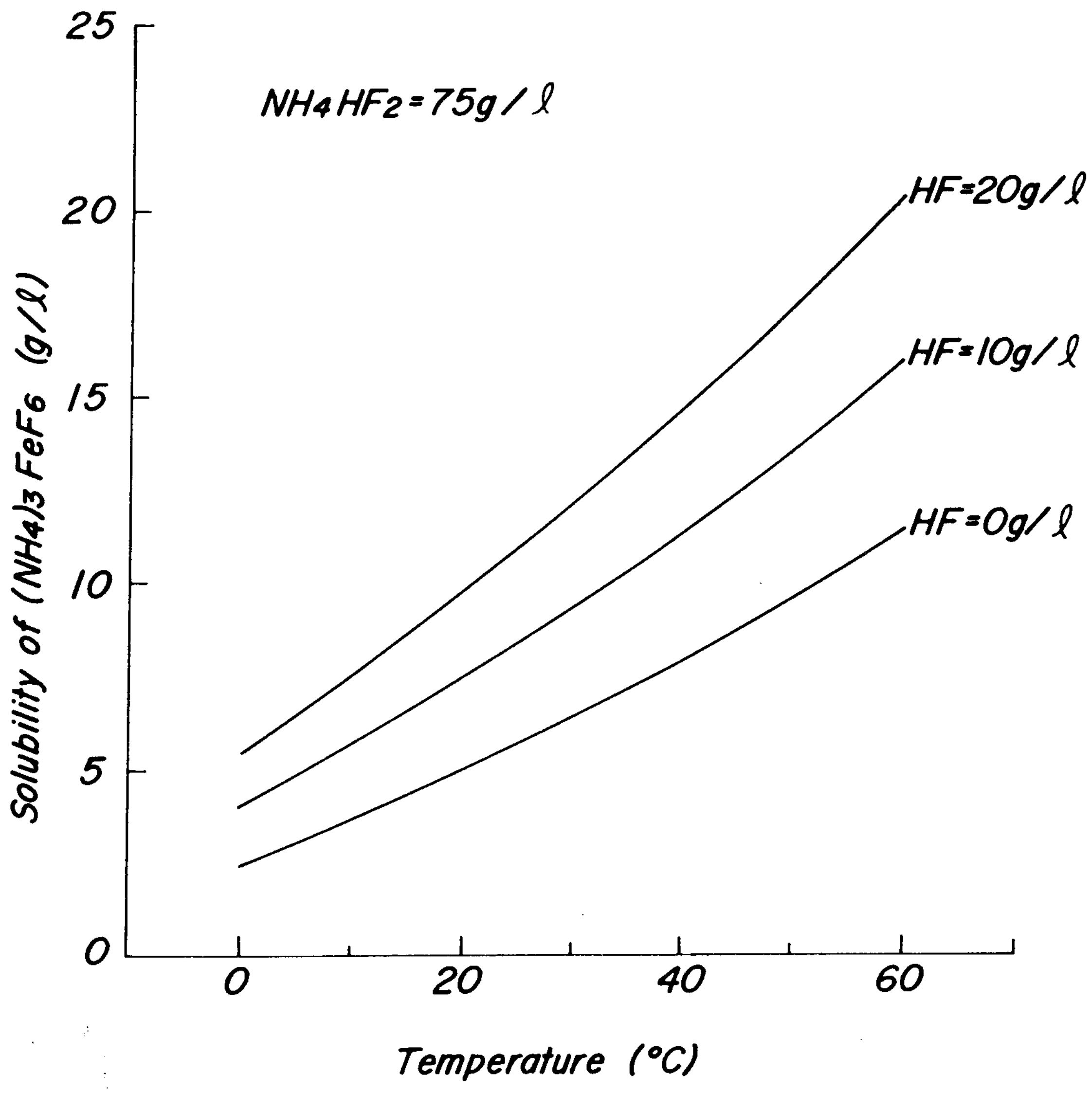
$NH_4HF_2$=75g/ℓ
HF=20g/ℓ
HF=10g/ℓ
HF=0g/ℓ
Solubility of $(NH_4)_3FeF_6$ (g/ℓ)
Temperature (°C)
0
5
10
15
20
25
0
20
40
60

FIG_4

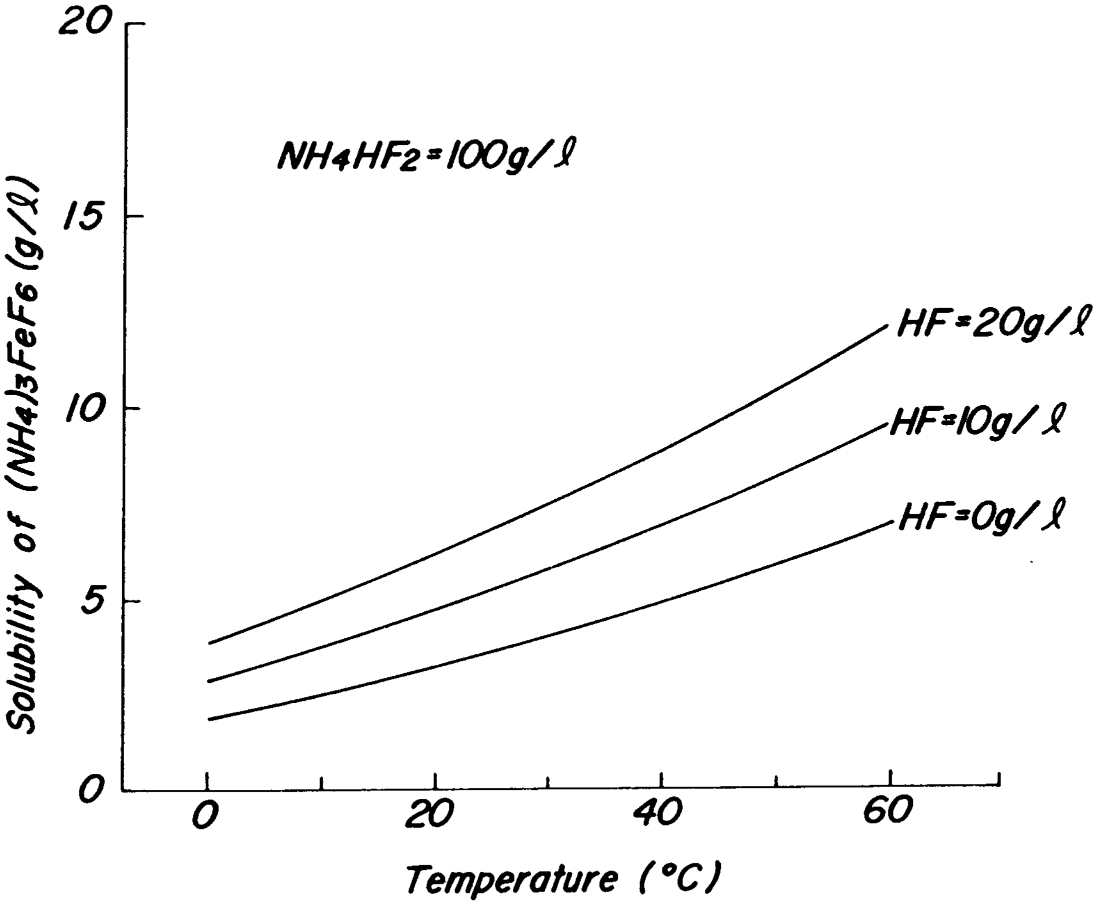

20
15
10
5
0
NH4HF2=100g/ℓ
Solubility of (NH4)3FeF6 (g/ℓ)
HF=20g/ℓ
HF=10g/ℓ
HF=0g/ℓ
0
20
40
60
Temperature (°C)

FIG. 5

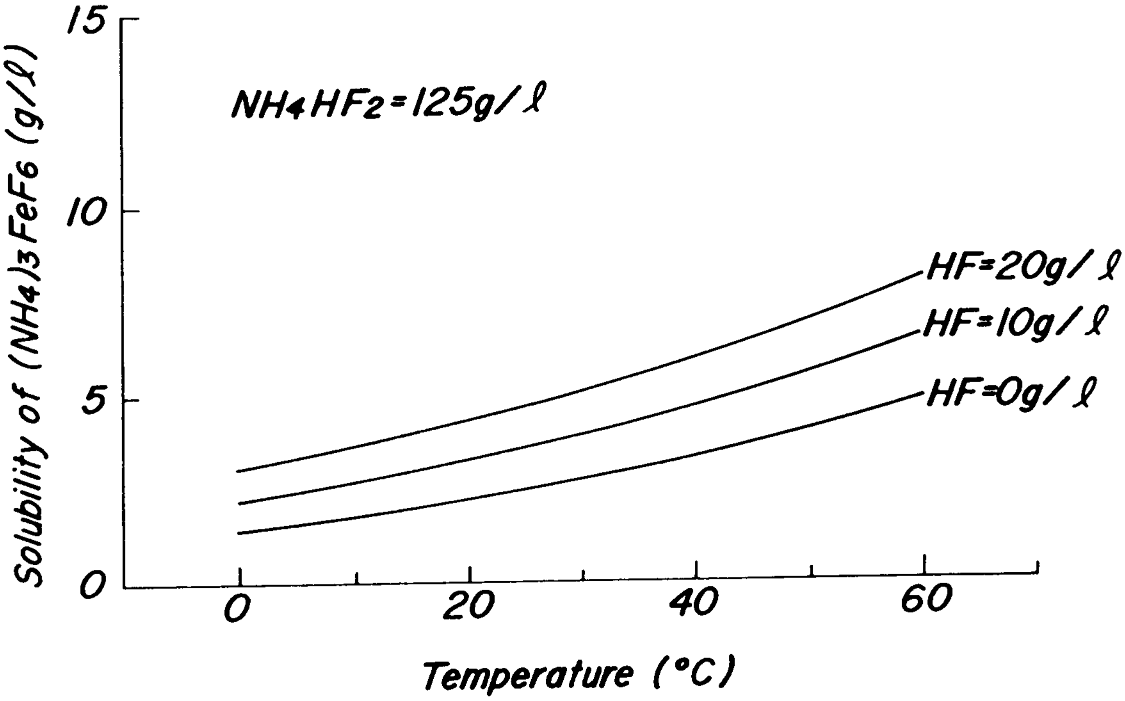
15
10
5
0
NH4HF2=125g/ℓ
HF=20g/ℓ
HF=10g/ℓ
HF=0g/ℓ
Solubility of (NH4)3FeF6 (g/ℓ)
0
20
40
60
Temperature (°C)

FIG. 6

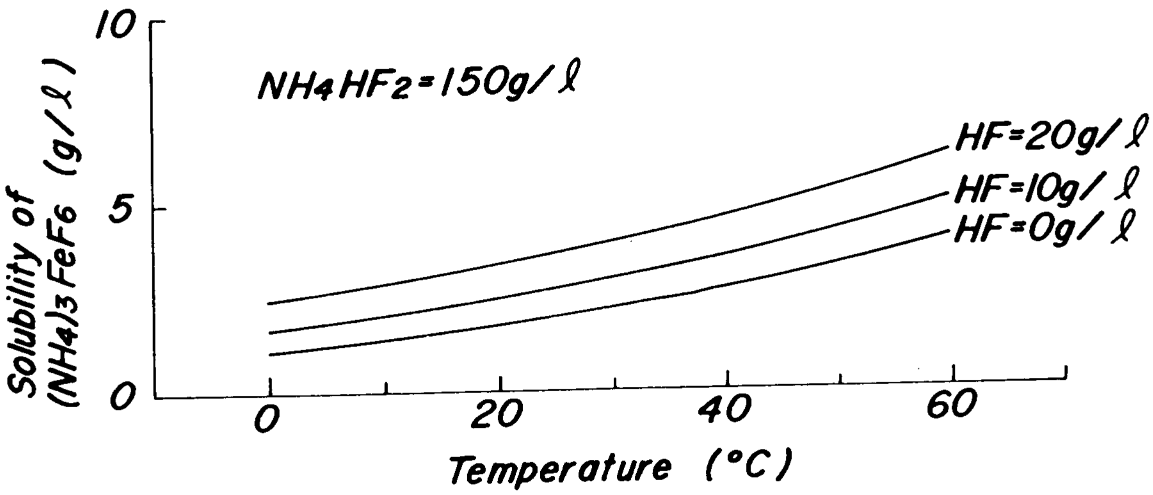
10
5
0
NH4HF2=150g/ℓ
HF=20g/ℓ
HF=10g/ℓ
HF=0g/ℓ
Solubility of (NH4)3FeF6 (g/ℓ)
0
20
40
60
Temperature (°C)

FIG. 7

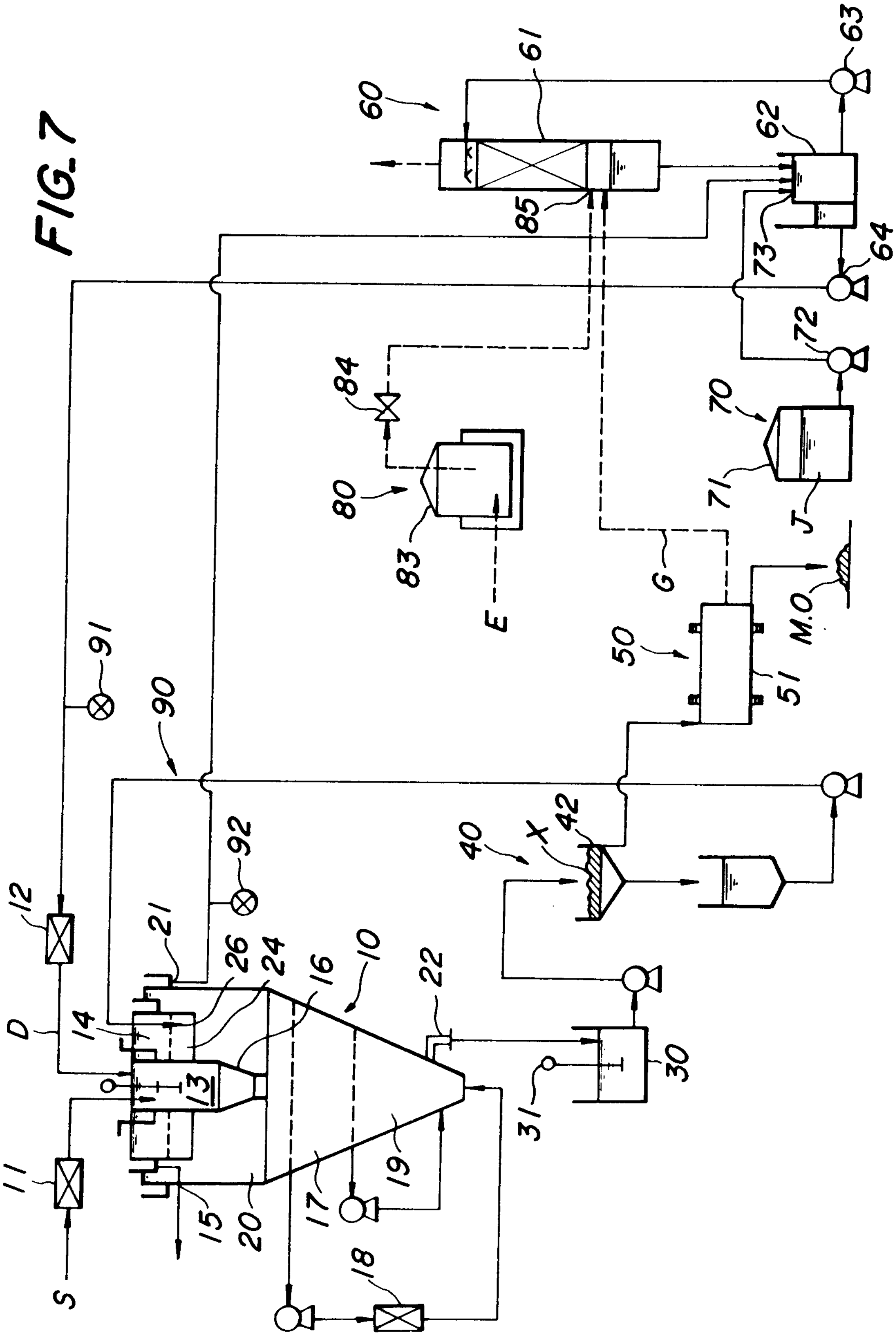
10
11
12
13
14
15
16
17
18
19
20
21
22
24
26
30
31
40
42
50
51
60
61
62
63
64
70
71
72
73
80
83
84
85
90
91
92
S
D
E
G
J
M.O
X

FIG.8

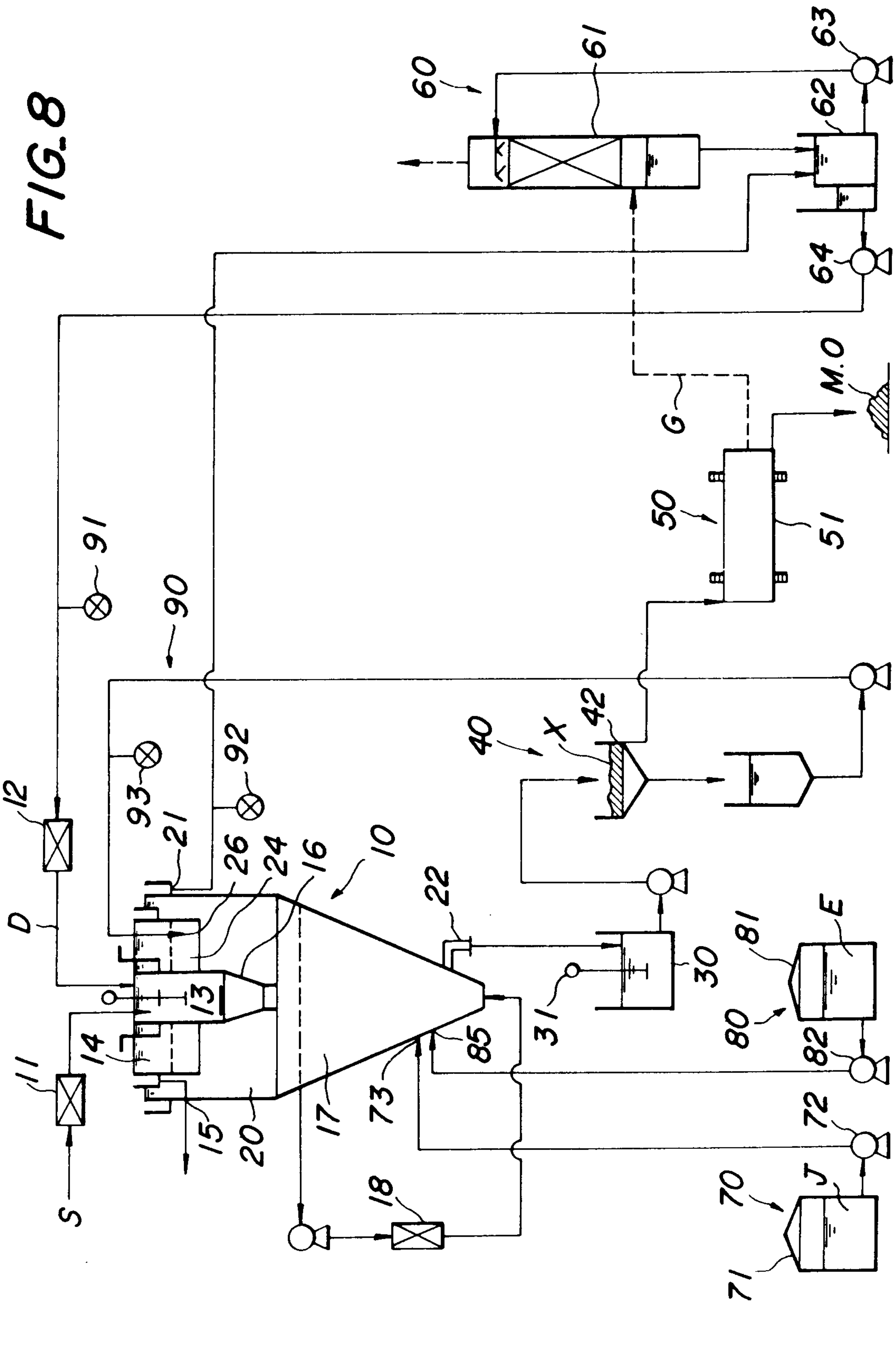

S
D
G
M.O
E
J
X
10
11
12
13
14
15
16
17
18
20
21
22
24
26
30
31
40
42
50
51
60
61
62
63
64
70
71
72
73
80
81
82
85
90
91
92
93

FIG.9

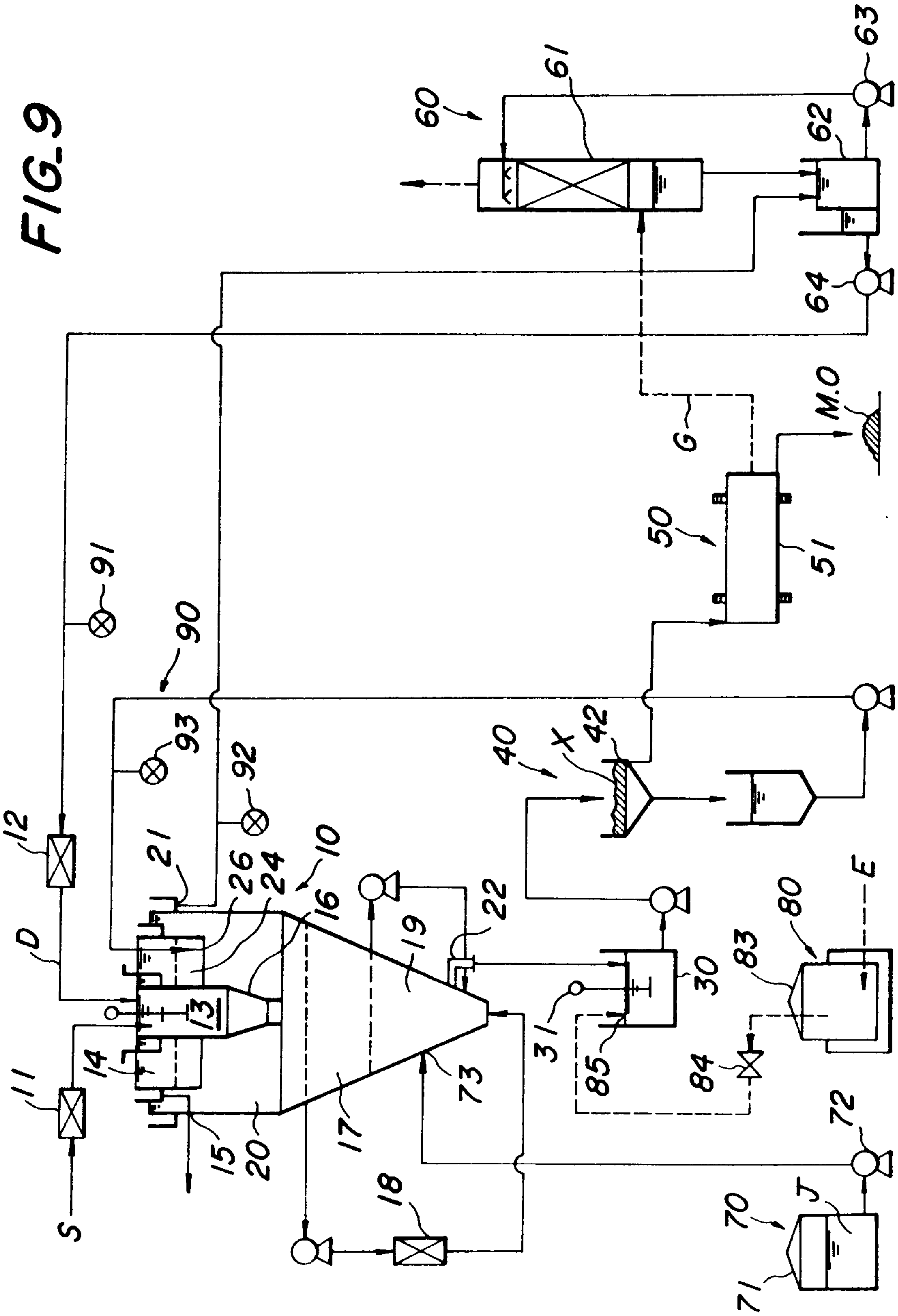

S
11
14
15
20
D
12
21
26
24
13
16
10
17
19
18
73
22
31
85
30
84
83
80
E
70
71
J
72
40
X
42
50
51
G
M.O
60
61
62
63
64
90
91
92
93

FIG_10

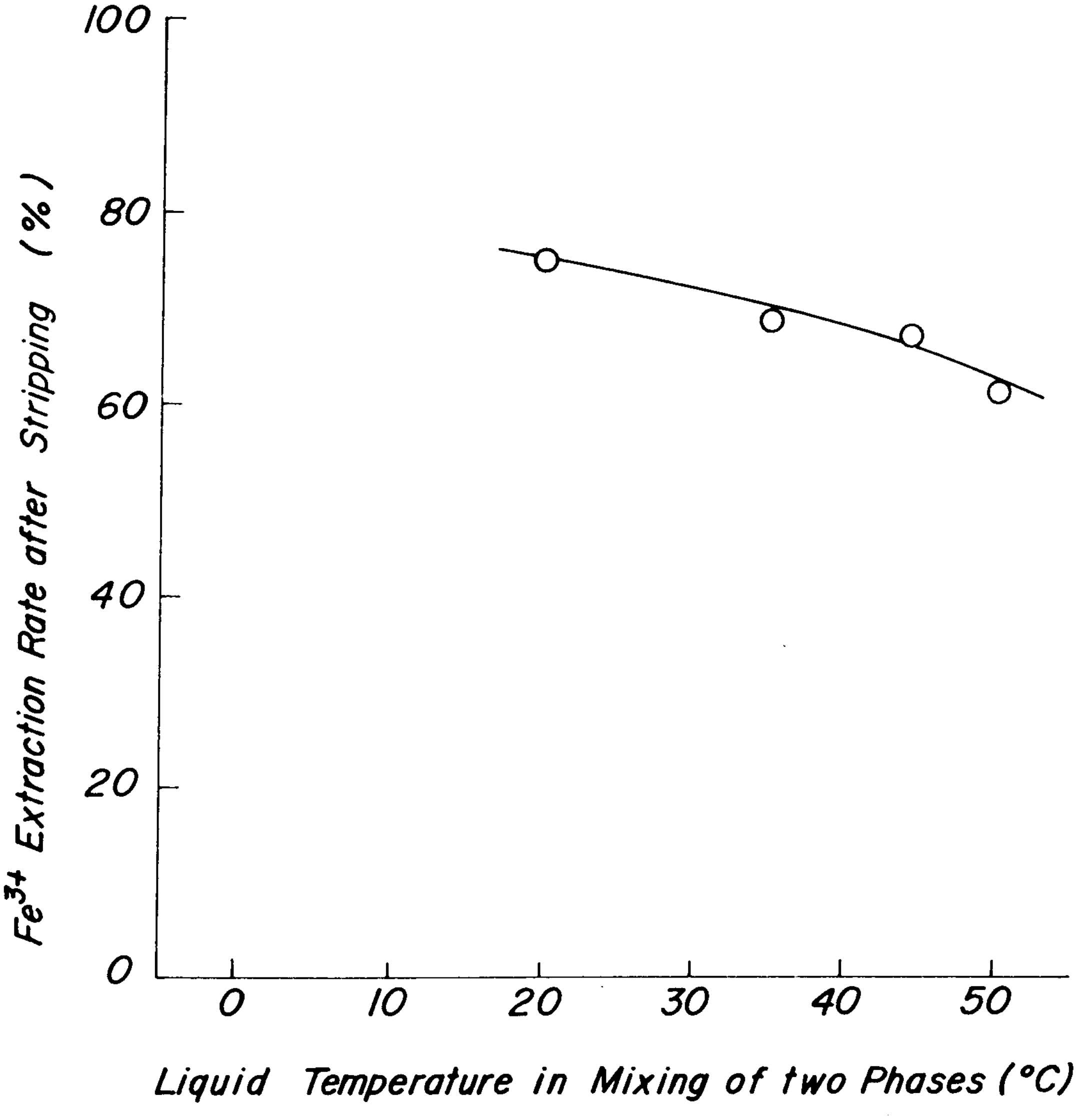
$Fe^{3+}$ Extraction Rate after Stripping (%)
100
80
60
40
20
0
0
10
20
30
40
50
Liquid Temperature in Mixing of two Phases (°C)

FIG. 11

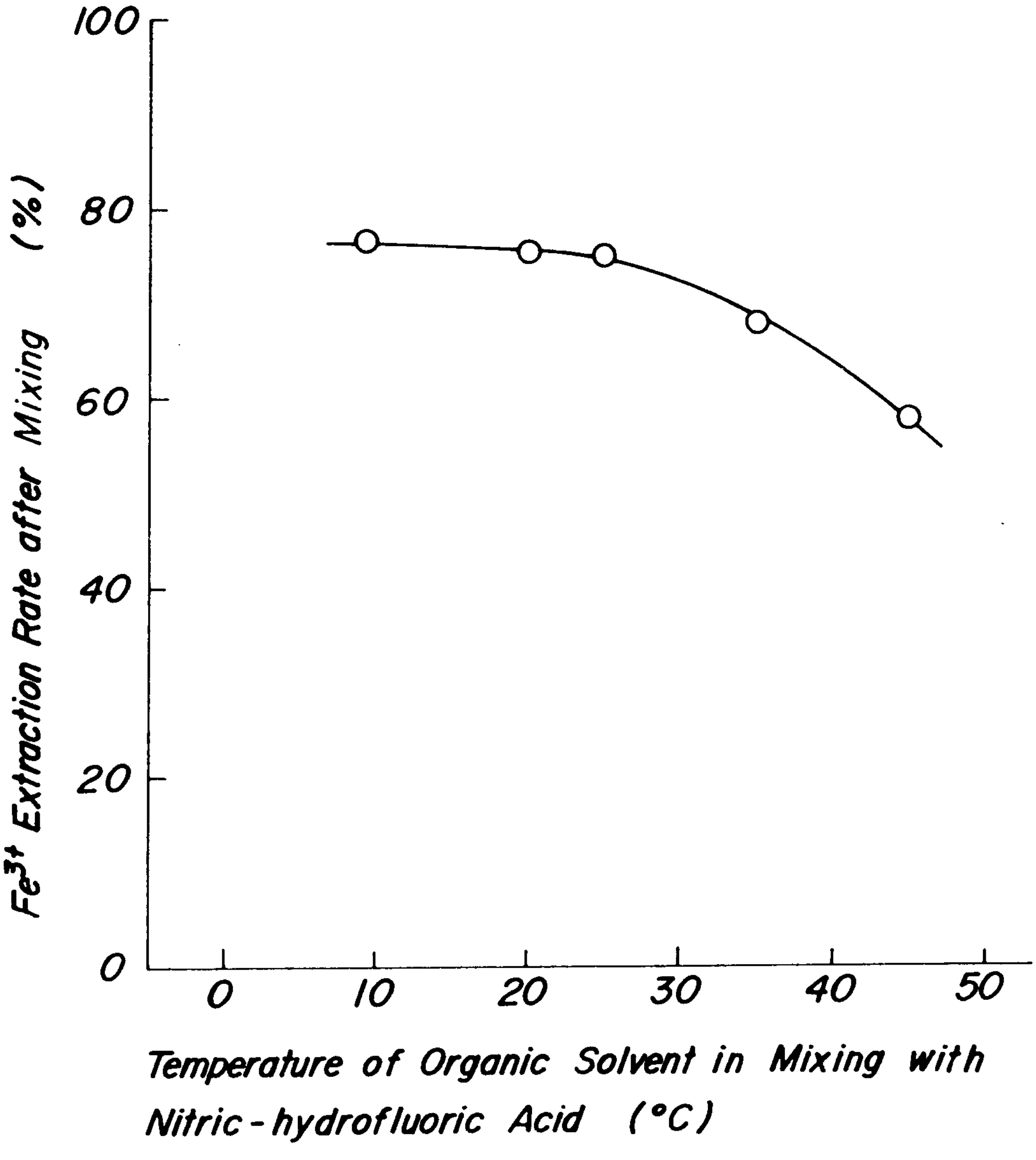
100
80
60
40
20
0
$Fe^{3+}$ Extraction Rate after Mixing (%)
0
10
20
30
40
50
Temperature of Organic Solvent in Mixing with Nitric-hydrofluoric Acid (°C)

FIG_12

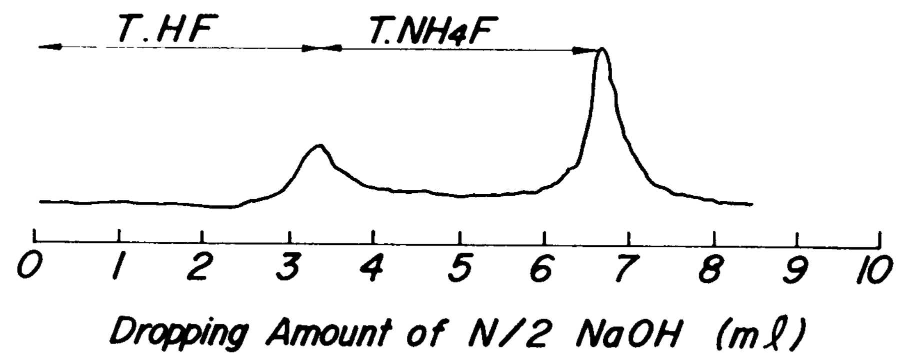


FIG_13

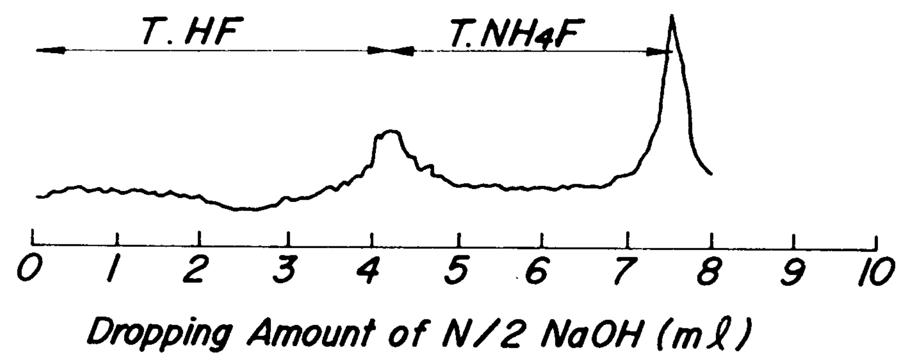


FIG_14

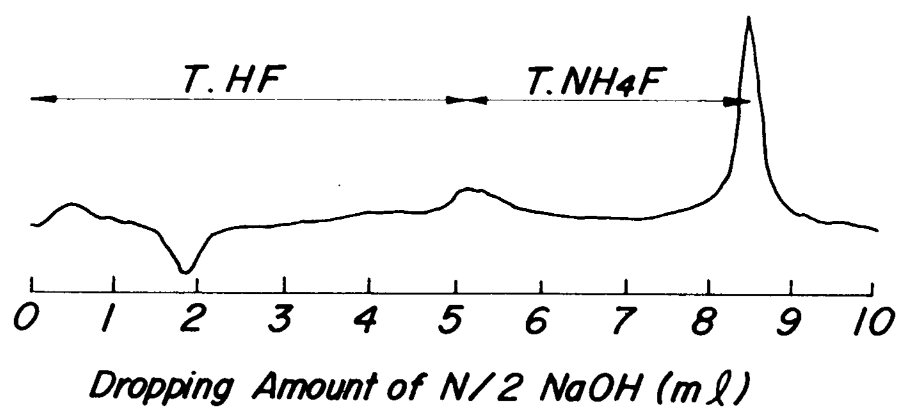

FIG. 15

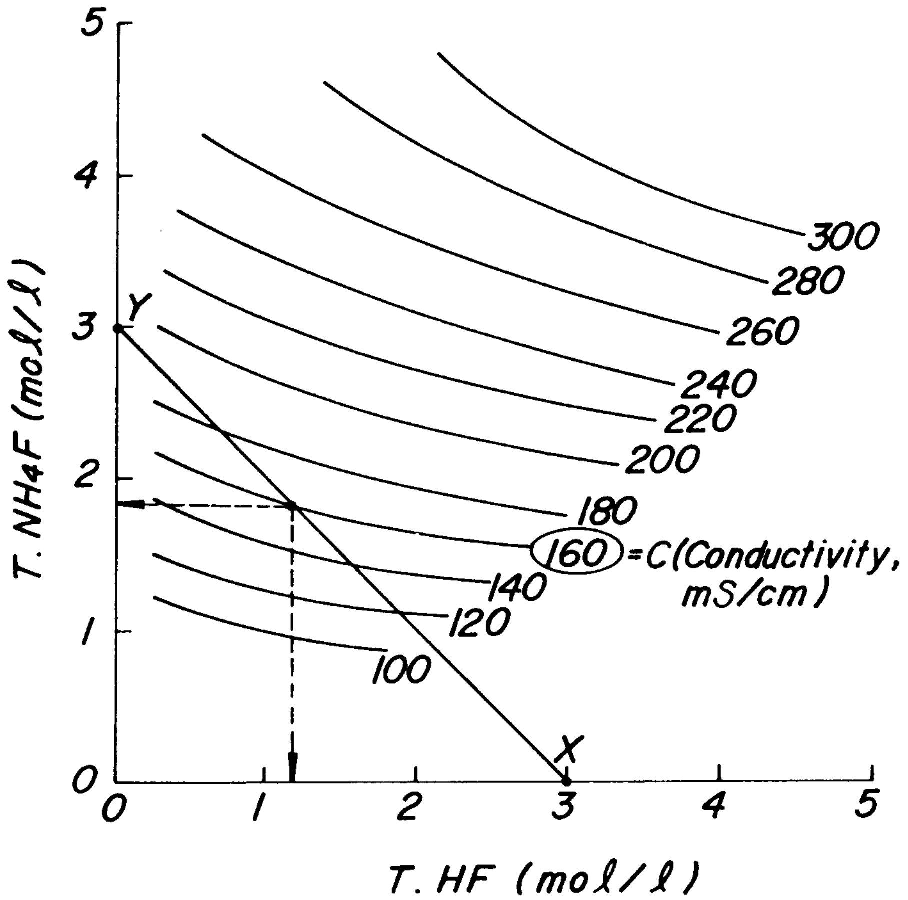
5
4
3
2
1
0
T. NH4F (mol/l)
Y
X
300
280
260
240
220
200
180
160 = C (Conductivity, mS/cm)
140
120
100
0
1
2
3
4
5
T. HF (mol/l)